# EUROPEAN PATENT SPECIFICATION

(11) **EP 1 075 769 B1**
(45) Date of publication and mention of the grant of the patent: **24.10.2007**
(21) Application number: 99941299.2
(22) Date of filing: 23.04.1999
(51) Int. Cl.: H04Q 3/00

(54) **RESOURCE ALLOCATION**
RESSOURCENZUWEISUNG
AFFECTATION DE RESSOURCE

(30) Priority: 29.04.1998 US 69168; 28.08.1998 US 143619
(43) Date of publication of application: 14.02.2001
(73) Proprietor: TELEFONAKTIEBOLAGET LM ERICSSON (publ), 164 83 Stockholm (SE)
(72) Inventor: JOHANSSON, Staffan, Engelbert, S-974 55 Lulea (SE); RYNBÄCK, Patrik, Johan, Erik, S-977 51 Lulea (SE); ANDERSSON, Christoffer, S-112 49 Stockholm (SE); JÖNSSON, Nils, Tore, Erik, S-974 51 Lulea (SE); JOHANSSON, Peter, S-972 36 Lulea (SE)
(74) Representative: Kühn, Friedrich Heinrich
(86) International application number: PCT/SE1999/000664
(87) International publication number: WO 1999/056475

(56) References cited:
- EP-A- 0 658 062
- WO-A-95/34974
- WO-A-95/34975
- WO-A-97/22213
- US-A- 4 713 806
- US-A- 4 720 850
- US-A- 5 713 075

## Description

### RELATED APPLICATION

This is a continuation-in-part application of commonly assigned U.S. Patent US-6333936 entitled "Method and Apparatus for Allocating Processing Resources," filed on April 29, 1998.

### FIELD OF THE INVENTION

The present invention relates to allocating resources in general, and more particularly, to allocating various data, signal, and/or Communications processing resources.

### BACKGROUND AND SUMMARY OF THE INVENTION

In certain environments, data, signal, and communication processing resources may be dedicated for use by particular hardware elements, Software elements (e.g., application programs), and human Operators, each of which may be generally viewed as a "resource user." While such resource dedication is convenient and also ensures that the necessary or otherwise appropriate resources are available whenever the resource user requests them, this one-to-one, dedicated relationship between a resource and a resource viser is inefficient. This inefficiency is primarily due to the fact that dedicated resources are most often underutilized since the resource user typically uses its dedicated resource less than 100% of the time.

The present invention employs a more efficient resource allocation approach in which resources are pooled and allocated on an "as needed" basis. In other words, in response to a resource request, a resource (if available) is "wididrawn" from a pool of resources and provided to the requesting resource user. When the resource user is finished using that resource, it is returned to the resource pool. Efficiency is increased because (1) the number of resource users may be considerably larger than the number of resources in the pool and (2) resources are removed from the pool only when they are actually used.

In order for a pooled resource system to work smoothly, the allocation and return of resources from and to the resource pool needs to be managed in an effective and efficient manner. Efficient management is more challenging when the pool of resources as well as the resource requests are not all the same. For instance, one resource request may be for a relatively small resource while another resource request might be for a relatively large resource. Moreover, resource requests may also differ in parameters other than size.

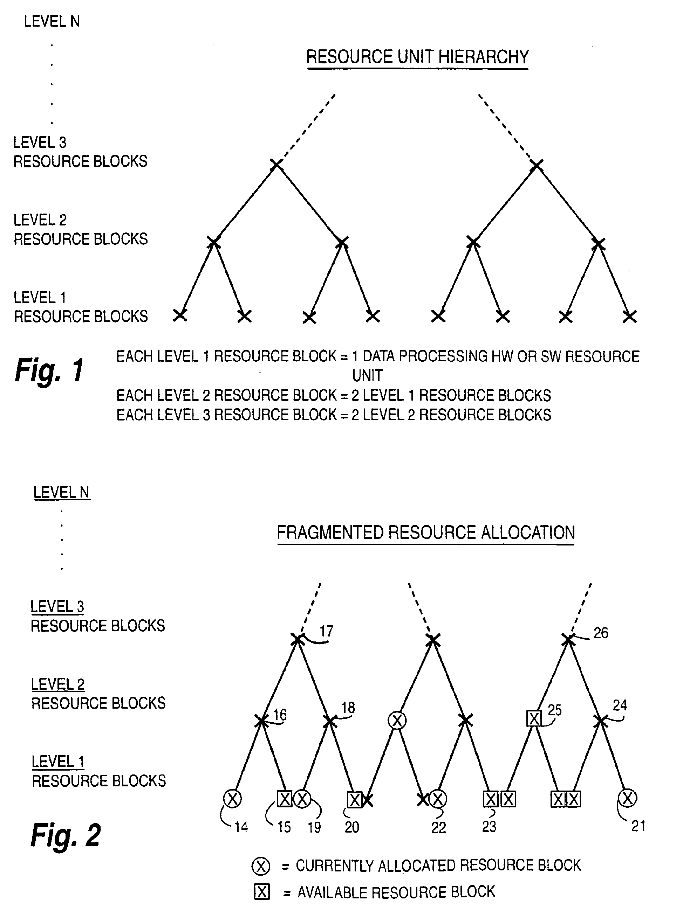

The present invention resolves these issues in part by imposing a structure on the resource pool including specific rules regarding how resources are to be allocated from the pool. Those rules may vary depending on the end application that requests and uses the resources. One example (but non-limiting) structure is the resource hierarchy shown in Fig. 1. The hierarchy includes a plurality of levels or tiers with each level having plural nodes representing a resource block at that level. The data structure is organized in such a way that it "mirrors" the physical resources in terms of how those physical resources are linked or grouped. The physical resources are configured, reconfigured, allocated, de-allocated, organized, and re-organized using the data structure.

In general, a number of lower level resource units are grouped to form a corresponding, higher level resource unit. Level 1 resource blocks correspond as shown in Fig. 1 to one data processing resource unit, where a resource unit may comprise hardware and/or software. Each level 2 resource block corresponds to a group (in this example two) of consecutive level 1 resource blocks. Similarly, each level 3 resource block of the resource hierarchy corresponds to a group of consecutive level 2 resource blocks.

Thus, if a resource request requires four data processing resource units, a single level 3 resource block would be allocated to that request. A level 3 resource block corresponds, in this example, to two level 2 resource blocks which in turn corresponds to four level 1 resource blocks equivalent to the four data processing resource units.

While resources may be allocated from and returned to such a hierarchical structure in random fashion, such an approach may ultimately lead to inefficiencies. In particular, the initial, ordered structure of the resource hierarchy may become fragmented after several resource block allocations and returns. Unfortunately, because of the fragmentation, resource blocks at certain levels cannot be fully utilized. For example, Fig. 2 shows the resource hierarchy of Fig. 1 with a fragmented resource allocation configuration. Circled resource blocks correspond to a currently allocated resource block, and a square enclosing a resource block represents a currently-available resource block. Because level 1 resource block 14 is currently allocated, level 2 resource block 16, logically linked to both level 1 resource blocks 14 and 15, cannot be allocated. A "domino effect" occurs -- since level 3 resource block 17 is linked to resource blocks 16 and 18, level 3 resource block 17 cannot be currently allocated even if level 2 resource block 18 were currently available.

On the other hand, if the currently-allocated resource block 19 had been allocated from currently-available resource block 15, the level resource block 18 would have been available for allocation. Similarly, if currently-allocated, level 1 resource block 21 was not allocated, and instead the currently-available level 1 resource block 23 was assigned to the resource request, the currently-unavailable level 2 resource block 24 would be available. The level 2 resource block 24 could then be combined with the level 2 resource block 25 to make available the level 3 resource block 26. Accordingly, as a result of fragmented/inefficient resource allocation at lower levels in the hierarchy, it may be difficult to provide a higher level resource block to a resource request even though there are sufficient, available resources in the resource pool to accommodate the higher level resource request.

In a pooled resource system where resources are allocated according to a particular strategy, different types or groups of pooled resources will likely have different resource allocation structures or algorithms. If more than one type of resource is required to satisfy individual Service requests, coordinating the allocation of both types of resources using two or more resource structures and/or algorithms becomes complicated and inefficient.

Consider the following example in a Code Division Multiple Access (CDMA) Communications System. In order for a user to transmit information, the user must be allocated a spreading code (a Software resource) corresponding to a particular channel capacity. Certain spreading codes have a smaller capacity. Other spreading codes in a spreading code resource hierarchy or tree may correspond to plural ones of smaller spreading code resources. As a resuk, a higher capacity, spreading code pai'ent can only be allocated if its corresponding lower capacity, spreading code children are all available. If one of those spreading code children is already allocated, the higher capacity channel spreading code parent cannot be allocated.

In addition to a Software spreading code resource, a user must be allocated the necessary hardware resource to physically perfomi the communication. An example of such hardware includes Digital Signal Processing (DSP) and/or radio transceiver circuitry. For example, a lowest capacity channel might use only one DSP and/or transceiver hardware unit. On the other hand, a higher capacity channel may require more than one DSP and/or transceiver hardware unit. Similarly, the higher capacity parent can only be allocated if all its supporting children are available. The fact that two different resource hierarchies, (i.e., Software and hardware resources) in the above example, must be navigated makes the provision of an appropriate capacity spreading code with appropriate capacity hardware resources particularly cumbersome and inefficient. Not only are two resource allocation strategies required for each pool of resources, there is no guarantee that just because a suitable resource is available from one pool that a corresponding and necessary resource from the other pool is also available.

The following documents are briefly described to give a better perspective for understanding this invention and represent the state of the art of the present invention.

WO97/22213 discloses a generic information model for configuration, control and management of auxiliary resources within a telecommunication network.

WO95/34974 discloses a telecommunication system with network of elements that provides network element functions enabling communication with other network elements.

The US patent US-4713806 discloses a communication system control for multi-service digital network, wherein Logical call paths are established by a resource management arrangement in response to subscriber messages.

Another document WO95/34975 discloses operations support network for operation and maintenance of telecommunications network has names assigned to managed objects of network element having software management view layer, and organized in hierarchical tree structures to represent application specific resources

It is an object of the present invention to overcome inefficiency by providing a resource pool structure including a data structure reflecting the free resources in the pool and that permits organized and efficient but still flexible allocation and de-allocation of resources.

It is a further object of the present invention to ensure that resource units are evenly utilized in a resource pool.

It is another object of the present invention to selectively re-allocate resources among the resource users to free other resources that can be used to form higher level resource blocks in order to meet a particular resource demand or to simply make available higher level resource blocks.

It is another object of the present invention to determine and implement a resource pool structure data structure, mirroring the free resources in the resource pool, that best suits current resource demands.

It is yet another object of the present invention to ensure that different types of resource units, e.g., hardware resources and software resources, are cooperatively allocated in response to resource requests in an efficient and effective manner.

The present invention configures a pool of resource units using a logical structure that includes first level and second level resource blocks. The terms "configure resources" or "configuration of resources" refer to a data structure which is organized to reflect or represent actual or physical resources. However, the actual resources themselves are not necessarily configured in a resource hierarchy like that shown in Fig. 1. Each first level resource block corresponds to an individual resource unit, where an individual resource unit is the smallest resource that a resource handler allocates from the resource pool. The first level resource blocks are provided in groups that form a lowest level of the resource pool structure. Each second level resource block corresponds to one of the groups of the first level resource blocks. For example, two first level resource blocks form a first level resource block group logically linked to a second level resource block. The second level resource blocks are provided in groups and form a next higher level of the resource pool structure.

Resources are allocated from the resource unit pool in an efficient manner. For example, if a request is made for a first level resource block, an available first level resource block is allocated from a partially-allocated, first level resource group where one or more first level resource blocks are currently already allocated. If a first resource block is not available, then an available first level resource block is created. In this case, a second level resource block is converted into a corresponding group of first level resource blocks, and one of the converted, first level resource blocks is then allocated to the request. A similar procedure is used at a next higher level, i.e., at third level resource blocks and groupings. In other words, if a first resource block is not available at the first level and cannot be obtained by conversion of a resource block at the second level, a third level resource block is converted into a corresponding group of second level resource blocks; a converted second level resource block is converted into a corresponding group of first level resource blocks; and one of the converted first level resource blocks is allocated.

Resource blocks are also restored to the resource unit pool structure efficiently. For example, a returned first level resource block is restored to a partially-allocated, first level resource block grouping. If that returned block completes that grouping, a new, second level resource block is made available. In one preferred embodiment, when a resource block is restored, the physical resource is restored to the same position in the resource array as from where it was originally allocated. However, the corresponding resource block in the data structure is placed last in a list of free resource blocks. This ensures that each of the physical resources in the pool is used about the same amount over time.

The resource pool is managed by a resource handler which stores in memory a data structure that mirrors the current status (free or occupied) of the resources in the resource pool. The resource pool structure represents and maintains the logical relation between resource units/blocks. For example, the data structure may include multiple lists, each list corresponding to a resource block level and each record/entry in the list representing one free resource unit. The list does not include allocated resource units.

To properly manage the resource unit pool or to otherwise meet a particular a resource request/demand, a resource handler may re-allocate resource units by moving a resource user from one resource block to another at that same level in order to create additional resource blocks at the next higher level. The resource handler may also receive traffic statistics about the number of requests for different level resource blocks collected by a statistics analyzer and determine which level in the resource unit pool structure receives the greatest number of requests, i.e., the most popular level. In an example communication system, assume the system capacity is eight voice calls or two data calls. Most of the calls in the system during busy hours are voice calls. During busy hours, if the whole system capacity is allocated for data calls, no voice calls can be made resulting in an insufficient subscriber service level in the area. By restricting the use of the transmission capacity, at least a minimum level of service for data calls and voice calls can be assured. The resource handler then re-allocates resource units in the current resource pool configuration to create additional resource blocks at the most popular level.

The present invention also cooperatively allocates different types of resource units in response to a resource request in an efficient and effective manner. An example of different types of resource units that may be cooperatively allocated include software resources and hardware resource units. A first data structure may be configured to correspond to a first pool of a first type of resource unit, e.g., software resource units. A second data structure may be configured to correspond to a second pool of a second type of resource unit, e.g., hardware resource units. A relationship is established between resource units in the first and second resource unit pools so that if one of the first resource units is available for allocation, a corresponding second resource unit is also assured available. Then when a request is received for a resource, one or more available resource units from both the first and second resource pools may be allocated using the established relationship.

The established relationship between two resource pools may be implemented, for example, using a mapping mechanism such as a matrix, where each row in the matrix represents different resource units of the first type and each column represents different resource units of the second type. Selection of a row corresponding to a resource unit of a first type automatically selects a corresponding resource unit of the second type associated with an activated column in the matrix. For a one-to-one type example relationship, the matrix is configured so that each row actively intersects with only one of the columns. The mapping relationship can be reconfigured by changing which row-column intersections are active.

Using the established relationship, only one resource selection algorithm is employed which simplifies resource allocation procedures involving more than one pool of resource units. Thus, the use of two or more separate resource selection algorithms is avoided. The need for "synchronizing" separate resource algorithms is also avoided. In other words, without the present invention, failure to synchronize plural resource selection algorithms leads to situations (not encountered in the present invention) where an available resource unit in one pool is allocated without a corresponding and necessary resource unit from another pool being available, e.g., as a result of different fragmentations resulting from previously allocated resources.

The present invention has particularly advantageous application to communications systems, and in particular, to radio communications systems. A preferred example embodiment of the present invention is disclosed in the context of a wide band, code division multiple access (WCDMA), spread spectrum, radio communications system. In the context of a W-CDMA radio communications system, the first pool of resource units may correspond to W-CDMA spreading codes (software type resource units), and a second pool of resource units may correspond to data processing and transceiver units (hardware resource units). Of course, as evident from the above description, the present invention has general applicability and is not limited to communications environments. Various features and advantages of the present invention, some of which have been described above, will be disclosed in further detail in conjunction with the drawings and detailed description.

### BRIEF DESCRIPTION OF THE DRAWINGS

These and other objects, features, and advantages of the present invention will now be described in conjunction with the drawings in which:
Fig. 1 is a diagram showing a resource unit hierarchy which is one example structure that may be imposed upon a resource pool;
Fig. 2 is a diagram showing a fragmented resource allocation using the resource unit hierarchy from Fig. 1;
Fig. 3 is a resource management system in accordance with a general embodiment of the present invention;
Fig. 4 is an example of an efficient resource allocation for the resource unit hierarchy of Fig. 1 in accordance with one example application of the present invention;
Fig. 5 is a flowchart diagram illustrating one set of example procedures for efficiently allocating resources in accordance with one aspect of the present invention;
Fig. 6 is a flowchart diagram illustrating one set of example procedures for efficiently returning resources in accordance with one aspect of the present invention;
Fig. 7 is a flowchart diagram illustrating one set of example procedures for reconfiguring a resource structure in accordance with one aspect of the present invention;
Fig. 8 is a function block diagram illustrating a radio communications system in which the present invention may be advantageously applied is a function block diagram illustrating a set of procedures for efficiently returning resources to the resource pool in accordance with one preferred but nevertheless example embodiment of the present invention;
Fig. 9 is a function block diagram illustrating in further detail an implementation of the present invention in a base station in a wideband code division multiple access radio communications system in accordance with one preferred but example embodiment of the present invention;
Fig. 10 is a resource management system in accordance with another embodiment of the present invention that draws upon resource units from different resource pools;
Fig. 11 is a flowchart diagram illustrating an example set of procedures for mapping resource units of different types in accordance with an example embodiment of the present invention; and
Fig. 12 is a diagram illustrating example hierarchical type data structures for first and second resource pools which are related together by way of a reconfigurable resource mapping matrix.

### DETAILED DESCRIPTION OF THE DRAWINGS

In the following description, for purposes of explanation and not limitation, specific details are set forth, such as particular embodiments, data flows, techniques, etc. in order to provide a thorough understanding of the present invention. However, it will be apparent to one skilled in the art that the present invention may be practiced in other embodiments that depart from these specific details. For example, while a preferred example embodiment of the present invention is described in the context of an example of a WCDMA radio network, those skilled in the art will appreciate that the present invention has wide application to communications and data processing systems. In other instances, detailed descriptions of well-known methods, interfaces, devices, and signaling techniques are omitted so as not to obscure the description of the present invention with unnecessary detail.

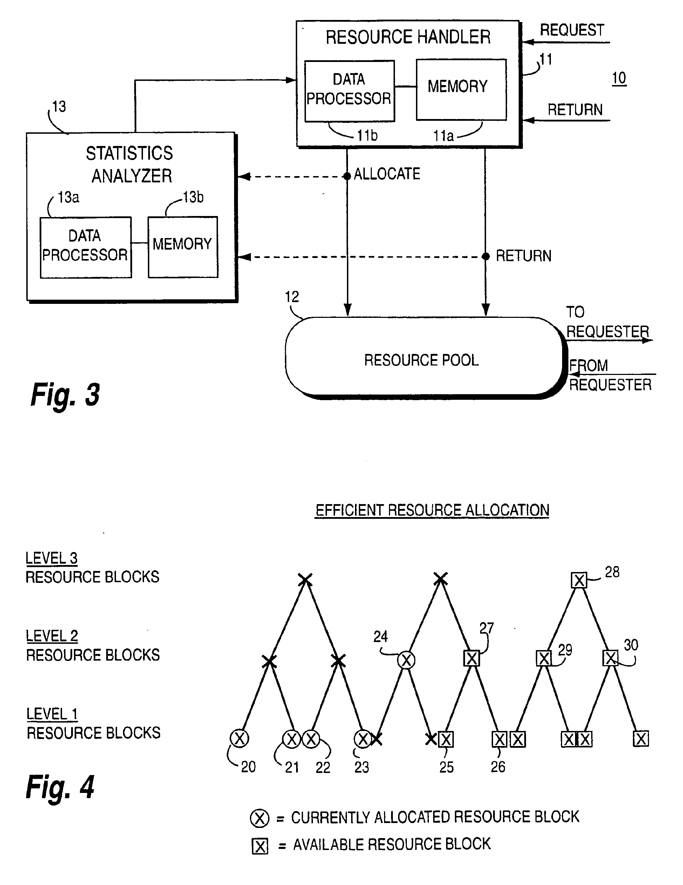

Referring to Fig. 3, a general embodiment of the present invention as a resource management system 10 configures a data structure mirroring the free resources in a pool of resources 12 using a hierarchical or other layered structure. One example hierarchical structure is shown in Fig. 1 including resource blocks at various levels one, two, three, ... N. Resource blocks at each level are configured into groups, each group linked to one resource block at the next higher level. Thus, in the example in Fig. 1, two level 1 resource blocks form a level 1 resource block group. A single level 2 resource block is linked to one of the level 1 resource block groupings. A single level 3 resource block is linked to a level 2 resource block grouping corresponding in the example shown in Fig. 1 to two consecutive level 2 resource blocks. Of course, groupings and/or structures other than that shown in Fig. 1 may be employed.

The resource management system 10 shown in Fig. 3 also includes a resource handler 11 and a statistics analyzer 13 in order to efficiently and otherwise optimally manage the allocation and return of resources from resource pool 12. The resource handler 11 includes a memory 11a and a data processor 11b. The statistics analyzer 13 also includes a data processor 13a and suitable memory 13b. As explained above, the statistics analyzer 13 monitors one or both of the allocations and returns of resources from/to resource pool 12. The statistics analyzer provides this information in an appropriate format to resource handler 11 which may, depending upon an analysis of the statistics, reorganize or otherwise reconfigure the resource pool hierarchy. Although the resource handler 11 and statistics analyzer 13 are shown as separate ate elements, each having its own data processor and memory, those skilled in the art will appreciate that they may be implemented using common data processing circuitry and memory.

In general, (though not always), the resource handler 11 attempts to allocate resource blocks to the extent possible so that higher level resource blocks are preserved for allocation. Consequently, the resource handler 11 first tries to allocate resource blocks from a grouping in which another resource block has already been allocated. Only when all of the resource blocks in a partially-allocated grouping are all currently allocated does the resource handler 11 draw upon another resource block group at that same level. When there are no available groups at the requested resource level, the resource handler 11 converts an available resource block from a next higher level (again from a group that is currently partially-allocated if possible) into a group at the requested resource block level. Then one of the converted resource blocks is allocated to the resource request. If there are no available resource blocks for conversion at that higher level, then the resource handler moves to the yet next, higher level and makes the necessary conversions through two levels to provide the requested resource block.

Similarly, if a resource block is returned to the resource pool 12, the resource handler 11 returns the resource block, with its status changed from occupied to free, to the same position in the resource array as from where it was allocated. Moreover, the resource handler 11 also endeavors, in a preferred example embodiment, to return resources in a manner such that the same resources are not always allocated, e.g., a round robin selection and return. Instead, utilization of resource blocks at each level is substantially equally distributed over time amongst all of the resource blocks at that level.

Because the allocation and restoration of resource blocks to the resource pool hierarchy typically depends on external factors, the resource handler 11 preferably periodically, or when needed, reconfigures the resource pool 12 to attain a more efficient configuration. For example, a resource block currently allocated may be de-allocated and another resource block at that same level in a more efficient position in the hierarchy may be reallocated to that request thereby making available higher level resource blocks for future allocation.

Fig. 4 shows a resource hierarchy configuration example in which resources are efficiently allocated using the present invention in contrast to the inefficient, fragmented resource block allocation shown in Fig.2. Level 1 resource blocks are allocated in sequential fashion from left to right across each hierarchical level. In this example, level 1 resource blocks 20-23 are currently allocated. The next two level 1 resource blocks are allocated to a level 2 resource block 24. In response to a resource request for a level 1 or a level 2 resource block, the resource handler 11 would draw upon level 1 and level 2 resource blocks 25-27, respectively. As a result of this efficient resource allocation, a level 3 resource block 28, or alternatively, two additional level 2 resource blocks 29 and 30, is (are) available for higher level request allocations.

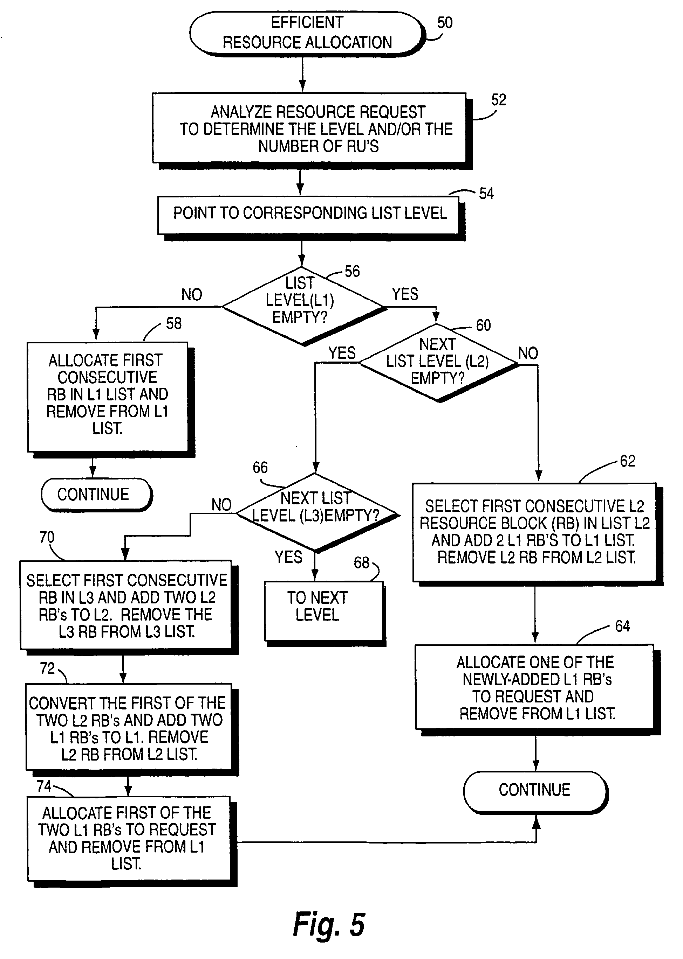

Fig. 5 shows a flowchart diagram illustrating example procedures (entitled Efficient Resource Allocation, at block 50) that may be followed by the resource handler 11 for efficiently allocating resources from resource pool 12 in accordance with one preferred, but nevertheless example, embodiment of the present invention. The resource handler 11 analyzes an incoming resource request to determine the level of the request in the resource pool hierarchy or other structure (Block 52). For example, the resource request may require a certain number of resource units. Using the example hierarchical configuration shown in Fig. 1, if the request is for one resource unit, a level 1 resource block must be allocated; if the request is for two resource units, a level 2 resource block must be allocated; and if the request is for four resource units, then a level 3 resource block must be allocated, and so forth.

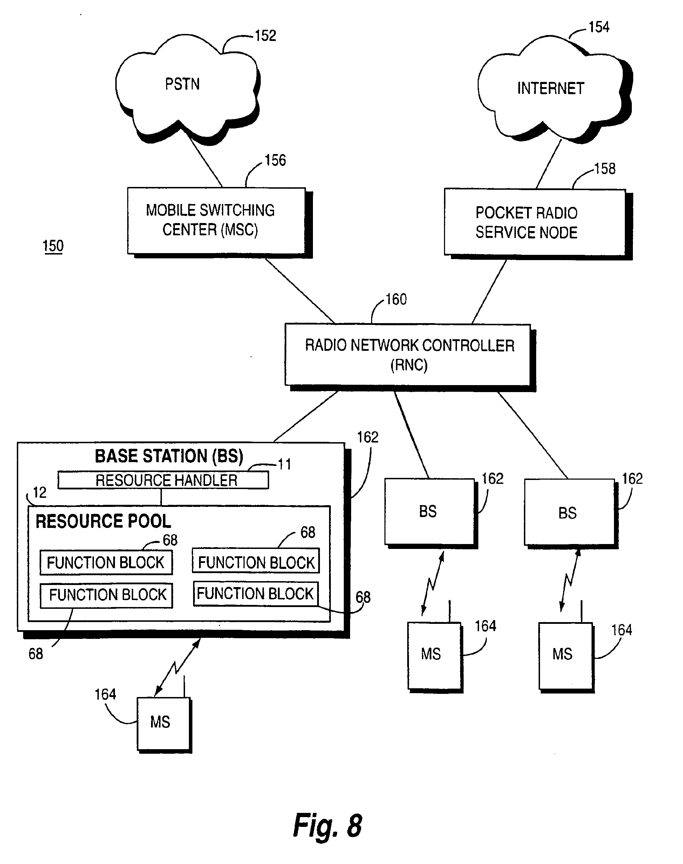

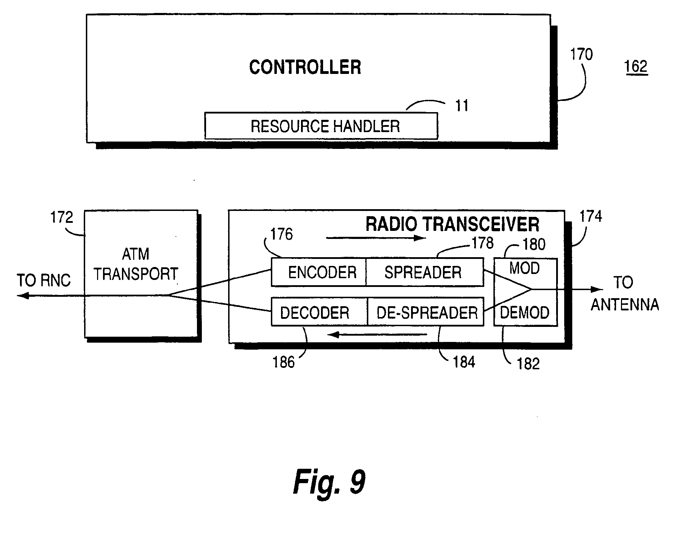

The resource pool configuration is mirrored in a list-based data structure stored in memory 11a accessed by resource handler 11. A corresponding list is maintained for each level in the resource pool configuration structure. A detailed example of such a list-based data structure will be described below in conjunction with the example embodiment of Figs. 8 and 9.

Based on that analysis, the resource handler 11 points to the corresponding level list (block 54) and decides if the corresponding list is empty (block 56). The list from level 1 (L1) is used as an example. In other words, the L1 list of resources in the resource pool 12 stored in the resource handler memory 11a is checked to detect any L1 resource blocks, i.e., from an L1 grouping with one or more resource blocks currently allocated.

If the L1 list is not empty, the resource handler 11 allocates the first available L1 resource block in the L1 list and removes it from the L1 list in memory 11a (block 58). On the other hand, if the L1 list is empty, the resource handler 11 determines whether the next level list, level 2 (L2) in this example, is empty (block 60). If there are entries detected in the L2 list, the resource handler 11 removes the first (if any) level 2 resource block from list L2 and adds a group of two (in this example) level 1 resource blocks to the L1 list (block 62). More generally, the resource handler 11 creates a group of level 1 resource blocks from a single level 2 resource block. One of the newly-added level 1 resource blocks is allocated by the resource handler 11 to the request and removed from the L1 list in resource handler memory 11a (block 64).

Alternatively, if there are no entries currently shown at list level L2 in memory 11a (block 60), the resource handler 11 determines whether the next list level, in this example the list for level 3 (L3) in the hierarchy, is empty (block 66). If not, the resource handler 11 selects the first available resource block from list L3 and converts that L3 resource block into a group of level 2 resource blocks (in this example two). This conversion effectively adds two L2 resource blocks to the L2 list and removes the L3 resource block from the L3 list (block 70). The resource handler 11 converts the first of the two, newly-created L2 resource blocks into a group of L1 resource blocks thereby adding two resource block entries to the L1 list (block 72). The converted L2 resource blocks accordingly removed from the L2 list in resource handler memory 11a. The resource handler 11 then allocates the first of the two newly-created L1 resource blocks to the resource request, and removes that L1 resource block from the L1 list in memory 11a. If the L3 list is empty, control proceeds to the next level (block 68), and similar procedures are performed.

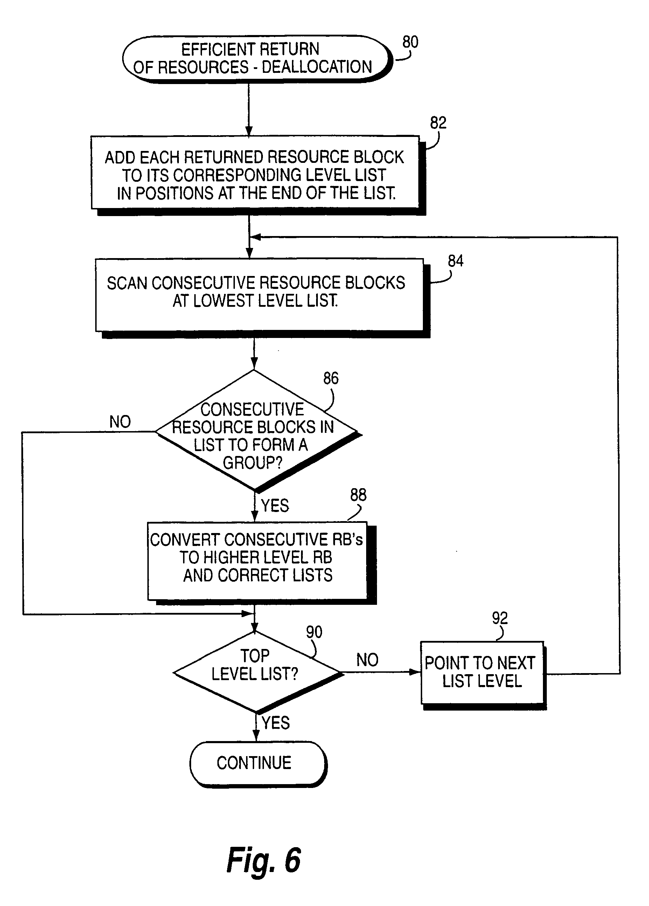

Fig. 6 illustrates an Efficient Return of Resources routine (block 80) implemented by the resource handler 11. Each returned resource block (RB) is added to its corresponding level list (block 82). If resource blocks are allocated at one end of a particular list in the hierarchy or other structure, then it is preferable to evenly distribute utilization of resource blocks by returning resource blocks to the opposite end of that list so that all of the other resources at that level will be used before the just-returned resource is used again. This technique for allocating and de-allocating resources circulates the resource blocks so that they are all used substantially uniformly.

Returning a resource block to the resource pool 12, the resource handler 11 scans consecutive resource blocks at the lowest level list (block 84). A decision is made (block 86) if the consecutive number of resource blocks in this list form a resource block group (block 86). If so, the resource handler 11 converts them into a higher level resource block and corrects the lists corresponding to both levels (block 88). A decision is made (block 90) if the top list level is reached. If not, the resource handler 11 points to the next list level in memory 11a (block 92) and control returns to block 84 to repeat the operations indicated in blocks 84-90. Thus, resource blocks are returned to the list and are grouped in such a fashion so that the highest level resource blocks can be made available.

Consider the following illustrative example. If the resources to be allocated represent hardware equipment, for example, it is advantageous to spread the resource allocations over all the resources. In that way, all the hardware is periodically checked for functionality rather than only when there is a heavy load requiring allocation of most or all resource units. This may be accomplished using the method outlined above with respect to Fig. 6 above, by always allocating free resources at a front end of the list, and returning the resources to the back end. The following illustrates this:

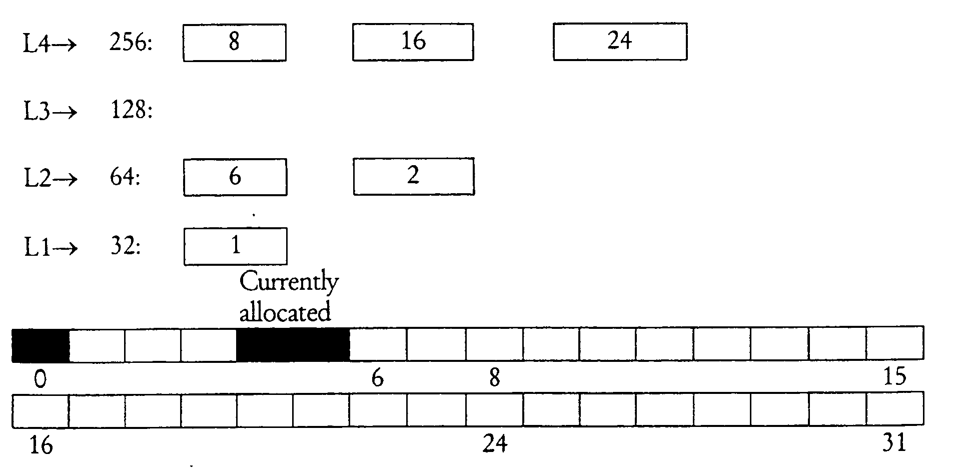

The resource at position 5 (one resource unit corresponding to capacity 32) is then returned to the last position in list L1. This leaves the following free resources:

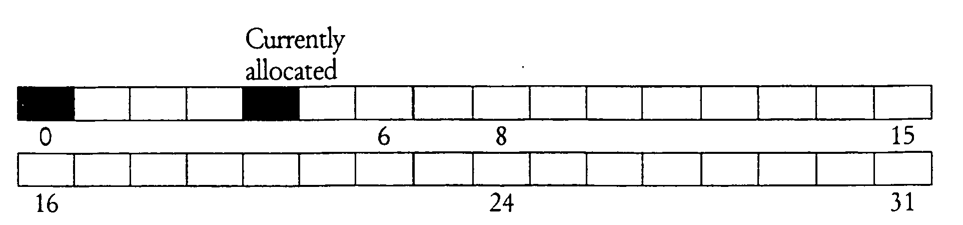

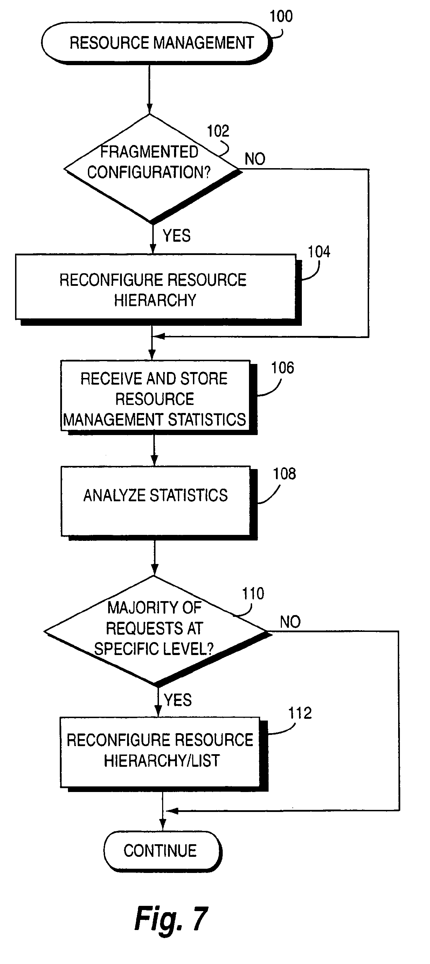

The resource handler 11 also performs periodic resource management functions as will be explained in the example Resource Management routine (block 100) shown in Fig. 7. The resource handler 11 determines whether the resource pool configuration is currently fragmented (block 102). If so, the resource handler 11 reconfigures the resource hierarchy or other structure (block 104) to de-fragment the current configuration. Certain resource requests may be reallocated to different resource blocks in order to group resource blocks so that the greatest number of highest level resource blocks are made available as described above.

The resource handler 11 also periodically receives statistics from statistics analyzer 13 continually gathered by statistics analyzer data processor 13a and stored in corresponding memory 13b before being transferred to the resource handler memory 11a (block 106). The resource handler 11 periodically analyzes the accumulated statistics (block 108) and decides, based on that analysis, whether a majority of the resource requests are occurring at a specific resource block level. For example, while the resource hierarchy is generally reconfigured in order to make available the resource blocks of the highest possible level, it may be that most of the resource requests occur at a level below the highest resource block level. Thus, in a simple example where there are three levels of resource blocks, it may be that only a small number of level 3 resource blocks are requested and that level 2 resource blocks are the most popular. Accordingly, rather than reconfiguring the resource pool which causes some disruption (albeit likely minimal disruption) in service for those allocated resource blocks that are reallocated, the resource handler 11 reconfigures the resource hierarchy to create as many level 2 resource blocks as possible (block 112). If a request is later made for a higher level 3 resource block, the resource handler 11 will generate (if possible) a level 3 resource block at the time of that request by combining (again, if available) a complete level 2 resource block grouping to create a single level 3 resource block. This type of statistical analysis and reconfiguration minimizes disruptions to service and also reduces data processing overhead required in combining and dividing various resource block groupings to make available a higher level resource block.

While the present invention may be advantageously applied to many environments, one example environment is portable radio communications. Fig. 8 illustrates in function block diagram format a portable radio communications system 150. Mobile switching center (MSC) 156 interfaces a public switched telephone network (PSTN) 152 to the mobile communications network 150. A packet radio service node 158 interfaces data communications from the Internet 154 with the mobile radio communications system. Both the MSC 156 and packet radio service node 158 are coupled to a radio network controller (RNC) 160. Although only one RNC is shown for purposes of simplified illustration, those skilled in the art will appreciate that more than one RNC may be employed. The radio network controller 160 is coupled to a plurality of base stations (BS) 162. Portable radios illustrated as mobile stations (MS) 164 communicate over an air interface with one or more base stations 162 using a variety of protocols and procedures known to those skilled in the radio communications art.

Each base station includes (among other things) a resource handler 11 and resource pool 12 such as those shown in Fig. 3. Resource pool 12 is comprised of function blocks 68 where each function block is divided into various resource units that can be uniquely addressed and allocated to support various services provided by the portable radio communications system 150. The function blocks 68 in resource pool 12 can correspond to hardware and/or software resources required, for example, to assign radio channels to provide radio communications with the mobile stations 164.

Depending upon parameters of a particular call setup, more or less resources are required for the call. For instance, if the call is a basic voice communication, a smaller number of resource units is required than for a more complicated call, e.g., a multimedia call including voice, data, video, etc. Even among data calls there are different bandwidth requirements for high speed and low speed data calls with higher bandwidth data calls requiring more resource units than lower bandwidth data calls.

To accommodate wireless, multimedia communications, efficient resource unit allocation and return must be achieved so that multimedia and other high bandwidth calls requiring higher level resource blocks can be handled as well as lower level resource blocks associated with less demanding calls. A preferred access methodology that accommodates multimedia and other high demand communications services is wide-band code division multiple access (WCDMA). Calls are allocated across a very wide frequency bandwidth, e.g., 5, 10, 15, etc. MHz, using orthogonal spreading codes, where one or more codes are assigned to each call. Each orthogonal spreading code is an example of a software-type resource block. Each base station is assigned a limited number of spreading codes.

Assuming that the mobile communications system 150 is a WCDMA system, the base station 162 may include a controller 170, an asynchronous transfer mode (ATM) transport 172, and a radio transceiver 174. An ATM transport interface to the radio network controller 160 is preferred because of its high efficiency and throughput. Controller 170 includes among other things a resource handler 11 and statistics analyzer 13 such as those shown in Fig. 3. The radio transceiver 174 includes a number of function resource blocks such as an encoder 176, a CDMA spreader 178, a modulator 180 for radio transmissions to the mobile stations 164. Additional function resource blocks are employed in the form of a demodulator 182, a CDMA de-spreader 184, and a decoder 186 for demodulating, de-spreading, and decoding radio transmissions from mobile stations 164.

Each function resource block corresponds to one or more hardware and/or software resource units, where a resource unit is an integral functional unit having a unique address that can be individually addressed and operated. For example, an encoder employs both hardware and software resource units. When a resource unit is allocated to a resource request, it is enabled and can then process data input provided by the requester.

The resource handler 11 maintains a "picture" of the resource units in a list data structure having a corresponding list for each free resource block level in its memory 11a. Each record/entry in a list represents one free resource block and may include information such as the type of resource unit (e.g., spreading code, encoder, modulator, etc.), resource unit address, current configuration, current state (enabled/disabled), etc.

When setting up a path for a call through the base station 162, one or more resource units from the various different function blocks 176-186 must be allocated. For a relatively simple voice call/path through the base station, an 8 kbps corresponding to a 32 kilosymbol per second (ksps) might use one encoder resource unit. The relationship between bit rate and symbol rate depends upon the particular coding employed in the encoder. On the other hand, a 64 ksps path might require two encoder resource units.

Consider an example where there are four resource block levels with level 1 corresponding to 32 ksps resource blocks, level 2 corresponding to 64 ksps resource blocks, level 3 corresponding to 128 ksps resource blocks, and level 4 corresponding to 256 ksps resource blocks. A list is maintained for each level L1-L4. As described above, if a list at a particular level is empty, the resource handler moves to the next level and converts an available resource block into plural resource blocks at the next lower level. In this example, the base station 162 includes 32 resource units. A map of the free resource units at a particular time is shown below with shaded blocks corresponding to currently allocated resource units, each block is identified by an index with indices 0, 4, 8, 15, 16, 24, and 31 being shown.

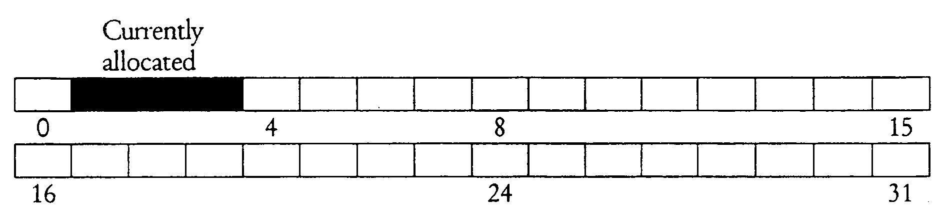

Note that resource blocks 1, 2, and 3 are currently allocated. As mentioned above, one 32 ksps channel requires allocation of one resource unit or one of the 32 blocks. A 64 ksps channel requires two resource units and therefore must be assigned starting with index/address 0, 2, 4, ... 28 or 30. A 128 ksps channel requires four consecutive resource units starting with index positions 0, 4, 8, ... 24, or 28. A 256 ksps channel requires eight consecutive resource units starting with index positions 0, 8, 16, or 24. Assuming that resource units are configured to provide the largest number of highest level groups as possible produces the resource structure shown below:

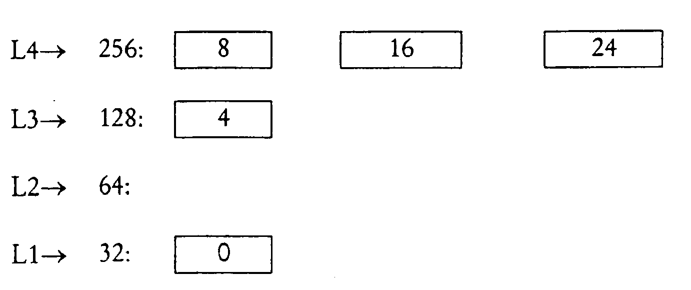

Following the above example, a request for a 64 ksps channel means that the resource handler 11 scans the level 2 (L2) list. Since the L2 list is empty, the resource handler 11 converts a 128 ksps resource block into two 64 ksps resource blocks starting at index 4 which results in the following:

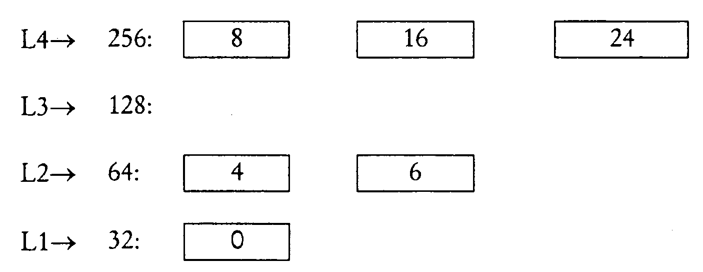

The conversion provides two 64 ksps blocks at indexes 4 and 6. The 64 ksps block at index 4 is allocated (i.e., because it is first in the L2 list) and removed from the L2 list resulting in the following:

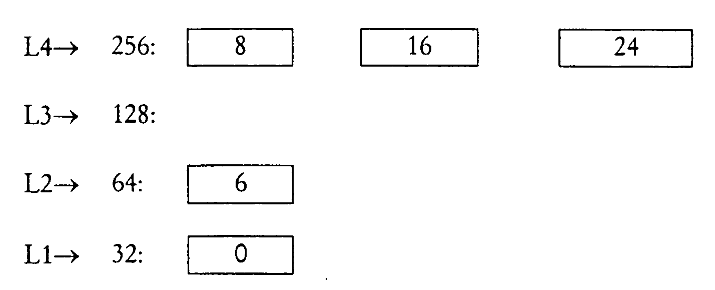

The current resource map is then as follows:

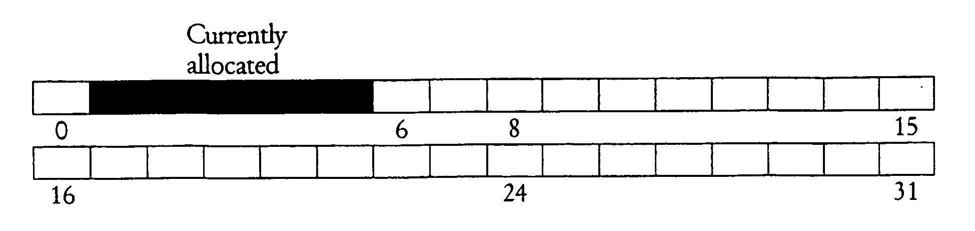

When resource units are returned (de-allocated), the resource units are placed last in the appropriate level list, i.e., the list having resource blocks of the same size. The resource manager 11 scans the list for consecutive resource blocks, and when the requisite number of consecutive resource blocks is detected, a next level resource block is created.

Consider for example the return of a 32 ksps resource block to the list of free 32 ksps resource blocks. Also assuming that the groupings include two resource blocks, if two consecutive 32 ksps resource blocks are in the list, the resource handler 11 creates a single 64 ksps resource block and deletes the two 32 ksps resource blocks from their respective lists. Consider the following example map of free resource blocks at the base station 162 having as mentioned above a total number of 32 resources.

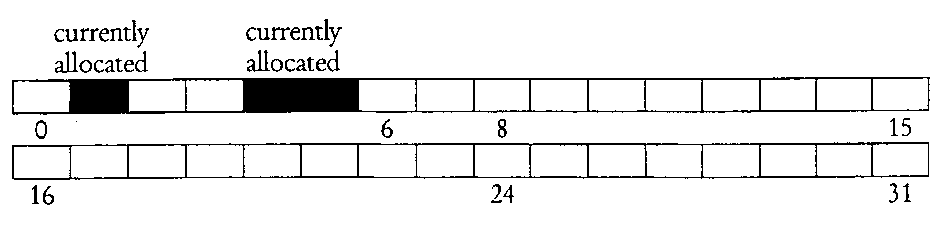

Assume that the 32 ksps resource block at index position 1 is returned to the resource pool. The resource handler 11 enters that resource block last into the list of free 32 ksps resource blocks resulting in:

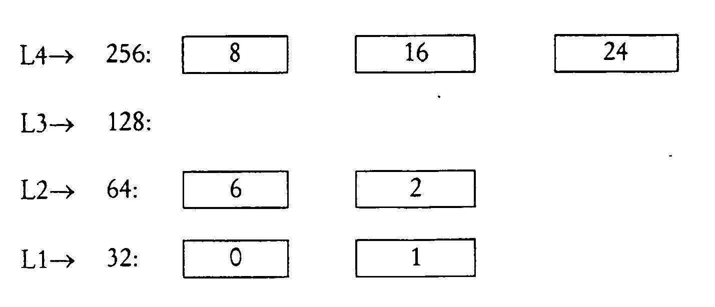

The resource handler 11 then scans this list for two consecutive resource blocks that can be grouped together to form a 64 ksps resource block as follows:

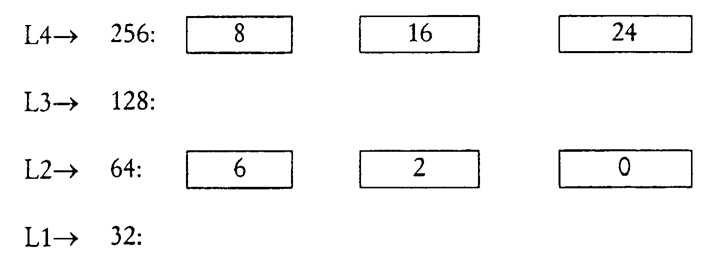

The resource handler 11 also scans for consecutive resource blocks in the 64 ksps resource block list. Since the two resource blocks start at zero and are consecutive, they are grouped together to form a 128 ksps resource block as follows:

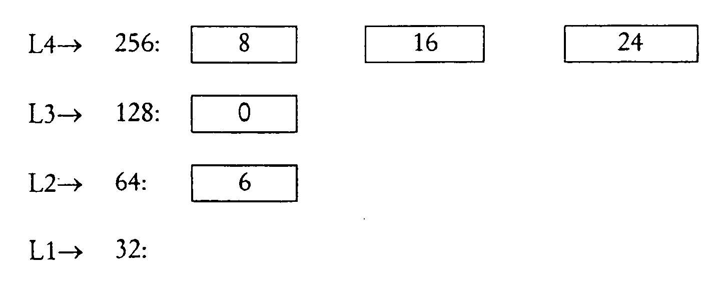

The resource handler 11 scans for consecutive resource blocks in the 128 ksps resource block list. Since there is only one resource block in this particular list, a 256 ksps resource block cannot be formed. The resource map after that allocation is as follows:

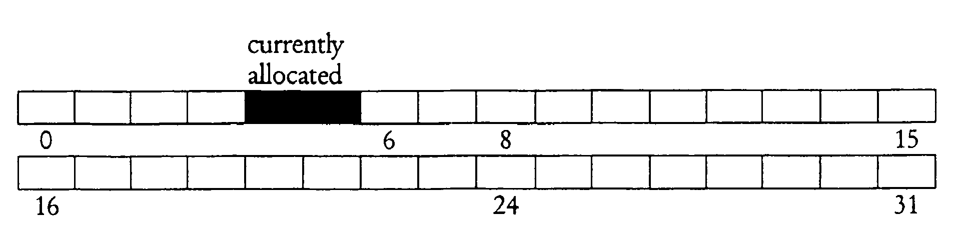

Such a list structure is also particularly advantageous in de-fragmenting the resource structure. The resource blocks to be moved are usually the resource blocks at lower level lists. Starting with the lowest level 32 ksps resource blocks, allocated resource blocks are moved to create as few larger level resource blocks as possible using the smallest number of de-allocations. Consider the following example of fragmented resources

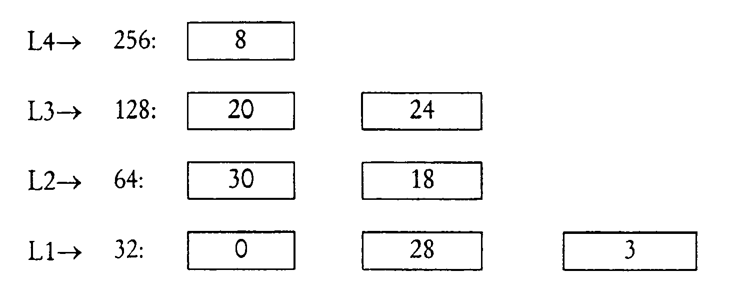

This configuration of fragmented resources is perhaps easier seen in the following resource structure map.

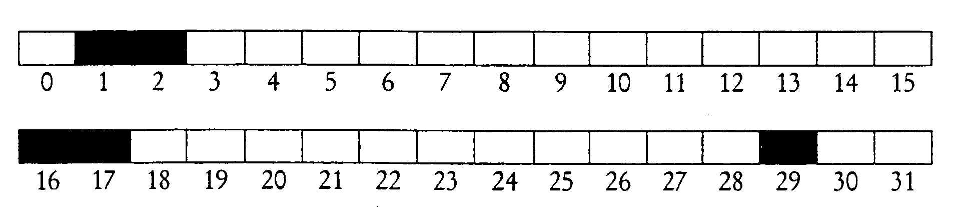

The resource structure may be more efficiently configured if the currently allocated 32 ksps resource blocks at index positions 1, 2, and 29 are allocated adjacent one another to make available larger resource blocks at their current respective positions. The first resource element at index position zero could be used to create a 64 ksps resource block if the 32 ksps allocation at index position 1 is moved to another index position. Accordingly, that 32 ksps allocation is moved logically to a buffer of allocated resources to be relocated. The lists for each level are processed in the same fashion except the highest level at 256 ksps.

The resource units are reassembled minimizing the number of resource blocks that have to be moved. Each 256 ksps resource block is examined to determine how many resource blocks need to be moved to complete that 256 ksps resource block. In this example, only two blocks from positions 16 and 29 need to be moved to the first position (starting at index position 0) of the first 256 ksps blocks. After de-fragmentation, the 32 ksps resource blocks have been re-located to adjacent index positions 0, 1, and 2. The 64 ksps resource block now occupies index positions 4 and 5. The resource structure map appears as follows:

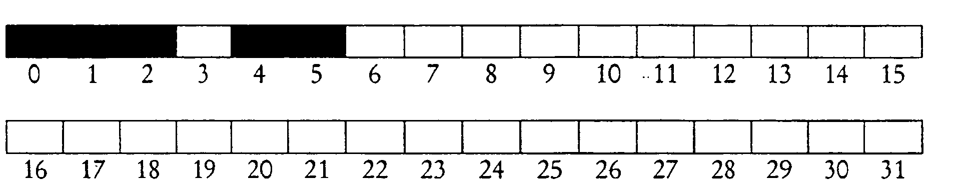

Another aspect of the present invention relates to efficient allocation of resources from different pools of resource units. A request for resources very often involves allocation of different types of resource units. For example, a resource request may require both software and hardware resources. In the context of a wideband CDMA radio communications system, a request for a resource corresponding to a communications channel requires allocation of a user-specific spreading code (a software resource unit) a signal processing and transceiver unit (a hardware resource unit). Each of the resource pools may be configured in a hierarchical tree, such as already described above, and each resource pool may have its own resource allocation strategy. Coordinating two or more resource allocation strategies for two pools of different types of resource units can be quite complicated and inefficient. Using different allocation strategies, the respective hierarchies fragment differently. As described above, a higher capacity parent resource unit can only be allocated if all of its lower capacity children are available. All of these factors may well produce situations where a resource unit of one type, e.g., a spreading code, is allocated to a resource request but a corresponding and necessary resource unit of the other type, e.g., a transceiver unit, is not available (and vice versa).

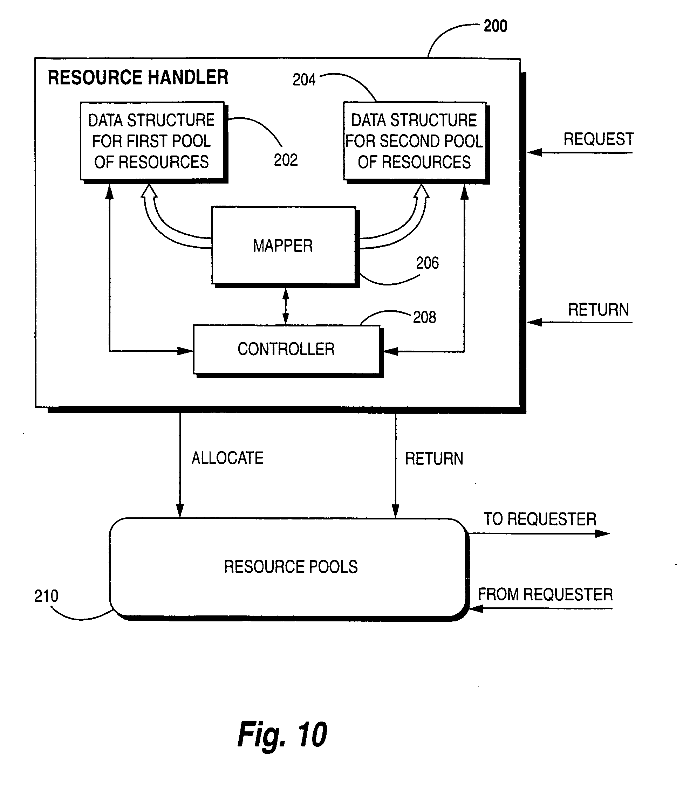

The present invention solves these problems by establishing a relationship between resource units in the first and second resource pools. Although the example embodiment employs two pools of different type resource units for description purposes, the invention applies to more than two resource pools. Referring now to the resource management system shown in Fig. 10, a resource handler 200 configures a first data structure 202 that mirrors the free resource units of a first type in a first resource pool included in the resource pools 210 using for example a hierarchical or other layered structure. However, any structure could be used to organize the resources. A second data structure 204 is configured to mirror the free resource units of a second type found in a second pool of resources contained in resource pools 210 again preferably using a hierarchical or other layered structure. One example hierarchical structure is shown in Fig. 1 above including resource units at various levels 1, 2, 3, ... N. Resource units at each level are configured into groups, each group linked to one resource unit at the next higher level. Thus, in the example in Fig. 1, two level 1 resource blocks form a level 1 resource unit group. A single level 2 resource unit is linked to one of the level 1 resource unit groupings. A single level 3 resource block is linked to a level 2 resource unit grouping corresponding in the example shown in Fig. 1 to two consecutive level 2 resource units. An example of the first pool of resource units may be software resource units like CDMA spreading codes. The second pool of resource units may be hardware resource units such as signal processing and transceiving units.

The resource handler 200 includes a mapper 206 which establishes a relationship between ones of the resource units in the first pool mirrored by data structure 202 and resource units in the second pool mirrored by data structure 204. Mapper 206 may establish various types of suitable relationship. For example, the relationship might include a one-to-one correspondence between individual resource units in the first and second resource pools. In a hierarchical or layered configuration, the one-to-one correspondence could exist per unit per level.

A controller 208 controls allocation of resources in accordance with the relationship established by mapper 206 and also attempts to allocate lower level resource units so that higher level resource units are preserved for allocation. In other words, controller 208 first tries to allocate resource units from a grouping in which another resource unit has already been allocated. Only when all of the resource units in a partially-allocated grouping are currently allocated does the controller draw upon another resource group at that same level. When there are no available resource units at the requested resource level, the controller 208 converts an available resource unit from a next higher level (again from a group that is currently partially-allocated if possible) into a group at the requested resource unit level. The controller 208 also returns resource units to its resource pool and keeps track of which resource units are currently allocated and which are currently available. If possible, the controller 208 returns resource units in a manner so that the same resources are not always allocated so that utilization of resource units at each level is substantially equally distributed over time amongst all of the resource units at each level.

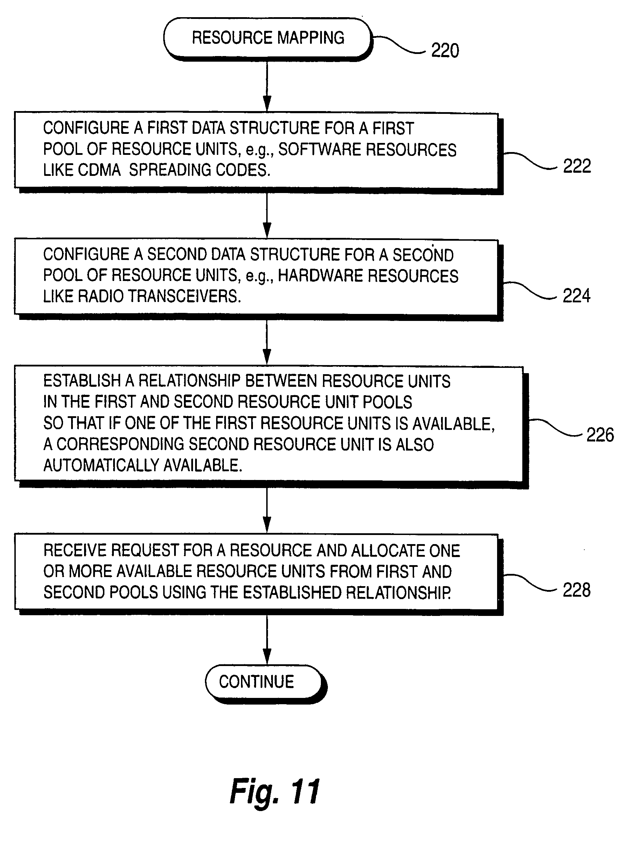

Referring now to the resource mapping routine (block 220) in Fig. 11, which may be employed by the resource handler 200, a first data structure is configured for a first pool of resource units, e.g., software resources like CDMA spreading codes (block 222). A second data structure is configured for a second pool of resources, e.g., hardware resources like radio transceivers (block 224). A relationship is then established between resource units in the first and second resource unit pools so that if one of the resource units from the first pool is available, a corresponding resource unit from the second pool is also automatically available (block 226). Because of this relationship, there only needs to be one resource unit allocation procedure to coordinate and efficiently allocate resource units from two (or more) resource pools that are required to satisfy a specific request (block 228).

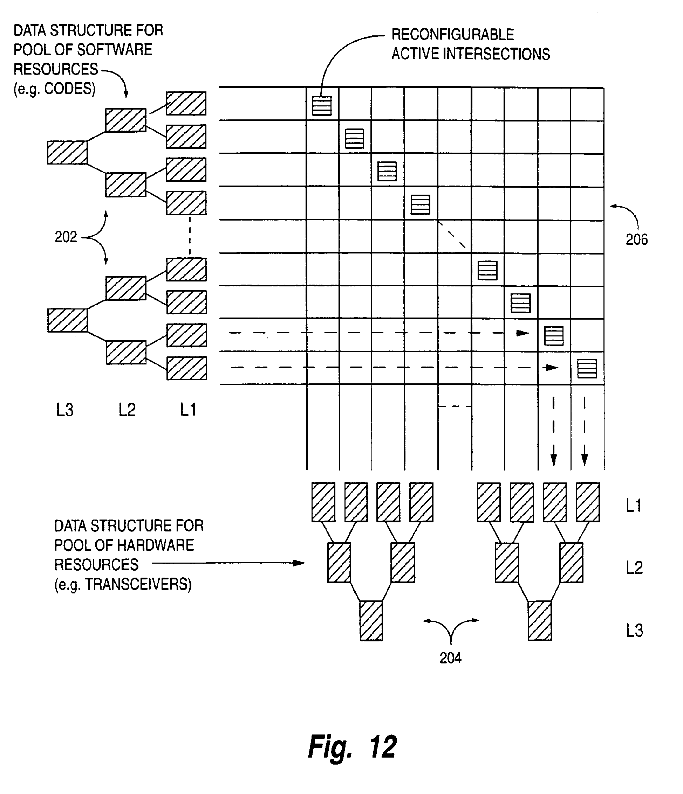

Fig. 12 shows an example Implementation of a mapper 206 as a matrix preferably implemented in Software. The first data structure 202 is shown as a multi-level, hierarchical data structure of Software resources like CDMA spreading codes. Data structure 204 is also shown as a multi-layer, hierarchical data structure of hardware resources like transceiver units. In this matrix Implementation, the Software resources correspond to rows of the matrix and the hardware resources correspond to columns. Fig. 12 shows a simple, example one-to-one correspondence in which each row resource unit is connected to (via an active intersection in the matrix structure) a single column resource unit.
Active matrix intersections can be modified or reconfigured to accommodate changing needs, the addition of new resource units, or the removal of resource units. While a matrix is shown as an example mapping mechanism, those skilled in the art will appreciate that other mapping mechanisms may be employed.

While the invention has been described in connection with what is presendy considered to be the most practical and preferred embodiment, it is to be understood that the invention is not limited to the disclosed embodiment, but on the contrary, is intended to cover vaiious modifications and equivalent arrangements included within scope of the appended claims.

## Claims

1. A method comprising the steps of:
configuring a first data structure corresponding to a first pool of a first type of resource units including:
first level resource blocks (fig 4; 20, 21, 22, 23, 25, 26), each corresponding to one or more of the first type of resource units, provided in groups of first level resource blocks and forming a first, lowest level of the first resource unit pool, and
second level resource blocks (fig 4; 24, 27, 29, 30), each second resource block corresponding to one of the groups of the first level resource blocks, provided in groups of second level resource blocks and forming a second, higher level of the first resource unit pool;
**characterized in**:
receiving a request for a resource that requires one or more resource units from at least said first pool of resource units; and
allocating at least one available resource block from one of the first level resource block groups in which one of the first level resource blocks is already allocated.

2. The method in claim 1, further comprising:
if no resource block is available from the first level resource block grouping in which one of the first level resource blocks is already allocated, allocating a resource block from a first level resource block grouping corresponding to one of the second level resource blocks.

3. The method in claim 2, wherein the first pool of resource units further includes:
third level resource blocks (fig 4; 28), each third level resource block corresponding to one of the groups of the second level resource blocks, provided in groups of second level resource blocks and forming a third higher level,
the method further comprising:
if no resource block is available from a first level or a second level resource block grouping, allocating a resource block from one of the third level resource block groupings.

4. The method in claim 3, further comprising:
receiving a request for a second level resource block, and
allocating an available second level resource block from a second level resource block grouping comprising at least a second level resource blocks already allocated.

5. The method in claim 4, further comprising:
if no second level resource block is available from a second level resource block grouping in which one of the second level resource blocks is already allocated, allocating a second level resource block from a second level resource block grouping corresponding to one of the third level resource blocks.

6. The method in claim 1, further comprising:
restoring a returned first level resource block to a first level resource block grouping in which one of the first level resource blocks is already allocated.

7. The method in claim 1, further comprising:
allocating resource blocks from one part of the resource unit pool, and
restoring returned resource blocks from another part of the resource unit pool.

8. The method in claim 1, further comprising:
reorganizing the resource unit pool by moving first level resource blocks from one grouping to another grouping to create an additional second level resource blocks.

9. The method in claim 8, wherein the reorganizing step is performed only when there is a request for a second level resource block and no second level resource block is currently available.

10. The method in claim 1, further comprising:
determining which level in the first resource unit pool receives a high number of requests, and
reorganizing the first resource unit pool by moving resource blocks from one grouping to another grouping to create an additional higher level resource block up to the determined level.

11. The method in claim 1, further comprising the steps of:
configuring a second data structure corresponding to a second pool of a second type of resource units;
establishing a relationship between ones of the first type of resource units in the first data structure and ones of the second type of resource units in the second data structure;
using the established relationship to allocate available resource units from the first and second pools of resource units to respond to the request.

12. The method in claim 11, wherein the relationship includes a one-to-one correspondence between individual ones of the first and second types of resource units.

13. The method in claim 12, wherein the first pool of resource units includes first, lowest level resource units of the first type provided in groups, and second, higher level resource units of the first type provided in groups, each corresponding to one of the groups of the first level resource blocks, and
wherein the second pool of resource units includes first, lowest level resource units of the second type provided in groups, and second, higher level resource units of the second type provided in groups, each corresponding to one of the groups of the first level resource units of the second type.

14. The method in claim 11, wherein the establishing step includes establishing a matrix where each row in the matrix represents a resource unit of the first type and where each column represents a resource unit of the second type so that selection of a row or a column corresponding to a resource unit of one type also selects a column or row, respectively, corresponding to a resource unit of another type.

15. The method in claim 14, further comprising;
configuring the matrix so that each row selects only one of the columns.

16. The method in claim 15, further comprising:
reconfiguring the matrix.

17. The method in claim 11, wherein the first type of resource units are software resource units and the second type of resource units are hardware resource units.

18. The method in claim 11 as applied to a code division multiple access (CDMA) communications system, wherein the first type of resource units are CDMA spreading codes and the second type of resource units are data processing and transceiving hardware.

19. A communications system, comprising:
a first pool (12) of communications resource units configured in a structure having plural levels including:
first level resource blocks (fig 4; 20, 21, 22, 23, 25, 26), each first level resource block corresponding to one or more resource unit, provided in groups of first level resource blocks and forming a first, lowest level, and
second level resource blocks (fig 4; 24, 27, 29, 30), each second level resource block corresponding to a first grouping of the first level resource blocks, forming a second level above the first level; and
**characterized in**:
a communications resource manager (11, 200) provided to allocate various ones of the resource blocks in response to communication resource requests, remove allocated resource blocks, and periodically reorganize by moving one or more lower level resource blocks from one grouping to another grouping to create an additional higher level resource block.

20. The communications system in claim 19, wherein the communications resource manager is provided to reorganize the structure when there is a request for a higher level resource and no higher level resource is currently available.

21. The communications system in claim 19, wherein the communications resource manager is provided to reorganize using a minimal number of moves of lower level resource blocks from one grouping to another grouping to create an additional higher level resource block.

22. The communications system in claim 19, wherein the communications resource manager is provided to allocate available resource blocks from one part of the structure and restores returned communications resource blocks from another part of the structure.

23. The communications system in claim 19, wherein the pool of communications resource units includes:
third resource blocks (fig 4; 28), each third resource block corresponding to a second grouping of the second resource blocks, forming a third level above the second level, and
wherein the communications resource manager is provided to allocate resource blocks so that a greatest number of higher level resources are maintained for allocation.

24. The communications system in claim 19, wherein the pool of communications resource units includes:
third resource blocks, each third resource block corresponding to a second grouping of the second resource blocks, forming a third level above the second level, and
wherein the communications resource manager is provided to restore returned resource blocks to create a greatest number of available higher level resources.

25. The communications system in claim 19, wherein the structure is a list data structure stored in a memory.

26. The communications system in claim 19, further comprising:
a second pool of respective communications resource units, configured in a structure having plural levels;
a mapper (206) is provided to map ones of the first pool of resource units to corresponding ones of the second pool of resource units;
a communications resource manager, in response to communication resource request, is provided to allocate one or more of the resource units in the first pool, which also allocates the corresponding one or more of the resource units in the second pool based on the established mapping.

27. The communications system in claim 26, wherein the first pool of resource units includes software resource units and the second pool of resource units includes hardware resource units.

28. The communications system in claim 26, wherein the communications system is a code division multiple access (CDMA) radio communications system, wherein the first pool of resource units are CDMA spreading codes and the second pool of resource units are data processing and transceiving hardware units.

29. The communications system in claim 28, wherein the mapper includes a matrix where each row in the matrix represents a different CDMA spreading code and where each column represents a different data processing and transceiving unit so that selection of a CDMA spreading code or a data processing and transceiving unit also selects a corresponding data processing and transceiving unit or CDMA spreading code, respectively.

30. The communications system in claim 29, wherein the mapper includes means for configuring the matrix so that each row is related to only one of the columns.

31. The communications system in claim 28, wherein the mapper includes means for reconfiguring the matrix.

32. Apparatus comprising:
means for storing a first data structure corresponding to a first pool of a first type of resource units; wherein the first pool of resource units includes first, lowest level resource units (fig 4; 20, 21, 22, 23, 25, 26) of the first type provided in groups, and second, higher level resource units (fig 4; 224, 27, 29, 30) of the first type provided in groups, each corresponding to one of the groups of the first level resource blocks,
means for receiving a request for one or more resource units;
**characterized by** having
allocating means for allocating an available first resource unit from one of the first resource block groups in which one of the first resource blocks is already allocated.

33. The apparatus in claim 32, wherein if no first resource block is available from a first resource block grouping in which one of the first resource blocks is already allocated, the allocating means is provided to allocate a first resource block from a first resource block grouping corresponding to one of the second resource blocks.

34. The apparatus in claim 33, wherein the first pool of resource units further includes:
third resource blocks, each third resource block corresponding to one of the groups of the second resource blocks, provided in groups of second resource blocks and forming a third higher level, and
if no first resource block is available from a first or a second resource block grouping, the allocating means is provided to allocate a first resource block from one of the third resource block groupings.

35. The apparatus in claim 34, wherein the receiving means is provided to receive a request from a second resource block, and
the allocating means is provided to allocate an available second resource block from a second resource block grouping which one of the second resource blocks is already allocated.

36. The apparatus in claim 35, wherein:
if no second resource block is available from a second resource block grouping in which one of the second resource blocks is already allocated, the allocating means is provided to allocate a second resource block from a second resource block grouping corresponding to one of the third resource blocks.

37. The apparatus in claim 32, wherein
restoring means is provided to restore a returned first resource block to a first resource block grouping in which one of the first resource blocks is already allocated.

38. The apparatus in claim 32, wherein:
the allocating means is provided to allocate resource blocks from one part of the resource unit pool, and
the restoring means is provided to restore returned resource blocks from another part of the resource unit pool

39. The apparatus in claim 32, further comprising:
reorganizing means for reorganizing the resource unit pool by moving first resource blocks from one grouping to another grouping to create an additional second resource blocks.

40. The apparatus in claim 39, wherein reorganizing the resource unit pool is performed when there is a request for a second resource block and no second resource block is currently available.

41. The apparatus in claim 32, further comprising:
determining means for determining which level in the first resource unit pool receives a greater number of requests, and
reorganizing means for reorganizing the first resource unit pool by moving resource blocks from one grouping to another grouping to create an additional higher level resource block up to the determined level.

42. The apparatus in claim 32, further comprising:
means for storing a second data structure corresponding to a second pool of a second type of resource units;
means for establishing a relationship between ones of the first type of resource units in the first data structure and ones of the second type of resource units in the second data structure; and
means for receiving a request for a resource that requires one or more resource units from the first and second pools of resource units, for using the established relationship to allocate available resource units from the first and second pools of resource units to respond to the request.

43. The apparatus in claim 42, wherein the relationship ensures that if one of the first type of resource units in the first pool is available for allocation, a corresponding second type of resource unit in the second pool is available for allocation.

44. The apparatus in claim 42, wherein the relationship includes a one-to-one correspondence between individual ones of the first and second types of resource units.

45. The apparatus in claim 42, wherein the first pool of resource units includes first, lowest level resource units of the first type provided in groups, and second, higher level resource units of the first type provided in groups, each corresponding to one of the groups of the first level resource blocks, and
wherein the second pool of resource units includes first, lowest level resource units of the second type provided in groups, and second, higher level resource units of the second type provided in groups, each corresponding to one of the groups of the first level resource units of the second type.

46. The apparatus in claim 42, wherein the establishing means is provided to establish a matrix where each row in the matrix represents a resource unit of the first type and where each column represents a resource unit of the second type so that selection of a row or a column corresponding to a resource unit of one type also selects a column or row, respectively, corresponding to a resource unit of another type.

47. The apparatus in claim 42, further comprising:
means for configuring the matrix so that each row selects only one of the columns.

48. The apparatus in claim 42, further comprising:
means for reconfiguring the matrix.

## Patentansprüche

1. Verfahren, das die folgenden Schritte umfasst:
Konfigurieren einer ersten Datenstruktur, die einem ersten Pool einer ersten Art von Ressourceneinheiten entspricht, zu denen Folgendes gehört:
Ressourcenblöcke der ersten Ebene (Figur 4: 20, 21, 22, 23, 25, 26), die jeweils einer oder mehreren Ressourceneinheiten der ersten Art entsprechen, in Gruppen aus Ressourcenblöcken der ersten Ebene bereitgestellt werden und eine niedrigste, erste Ebene des ersten Ressourceneinheiten-Pools bilden, und
Ressourcenblöcke der zweiten Ebene (Figur 4: 24, 27, 29, 30), die jeweils einer der Gruppen aus Ressourcenblöcken der ersten Ebene entsprechen, in Gruppen aus Ressourcenblöcken der zweiten Ebene bereitgestellt werden und eine höhere, zweite Ebene des ersten Ressourceneinheiten-Pools bilden,
**gekennzeichnet durch**:
das Empfangen einer Anforderung einer Ressource, die eine oder mehrere Ressourceneinheiten aus zumindest dem ersten Ressourceneinheiten-Pool benötigt, und
das Zuteilen mindestens eines verfügbaren Ressourcenblocks aus einer der Ressourcenblockgruppen der ersten Ebene, bei denen einer der Ressourcenblöcke der ersten Ebene bereits zugeteilt worden ist.

2. Verfahren nach Anspruch 1, das des Weiteren Folgendes umfasst:
Zuteilen eines Ressourcenblocks aus einer Ressourcenblockgruppierung der ersten Ebene, die einem der Ressourcenblöcke der zweiten Ebene entspricht, wenn kein Ressourcenblock aus der Ressourcenblockgruppierung der ersten Ebene, bei der einer der Ressourcenblöcke der ersten Ebene bereits zugeteilt wurde, verfügbar ist.

3. Verfahren nach Anspruch 2. bei dem der erste Ressourceneinheiten-Pool des Weiteren Folgendes enthält:
Ressourcenblöcke der dritten Ebene (Figur 4: 28), die jeweils einer der Gruppen aus Ressourcenblöcken der zweiten Ebene entsprechen, in Gruppen aus Ressourcenblöcken der zweiten Ebene bereitgestellt werden und eine höhere, dritte Ebene bilden,
wobei das Verfahren des Weiteren Folgendes umfasst:
Zuteilen eines Ressourcenblocks aus einer der Ressourcenblockgruppierungen der dritten Ebene, wenn kein Ressourcenblock aus einer Ressourcenblockgruppierung der ersten oder der zweiten Ebene verfügbar ist.

4. Verfahren nach Anspruch 3, das des Weiteren Folgendes umfasst:
Empfangen einer Anforderung für einen Ressourcenblock der zweiten Ebene und
Zuteilen eines verfügbaren Ressourcenblocks der zweiten Ebene aus einer Ressourcenblockgruppierung der zweiten Ebene, die mindestens einen Ressourcenblock der zweiten Ebene umfasst, der bereits zugeteilt worden ist.

5. Verfahren nach Anspruch 4, das des Weiteren Folgendes umfasst:
Zuteilen eines Ressourcenblocks der zweiten Ebene aus einer Ressourcenblockgruppierung der zweiten Ebene, die einem der Ressourcenblöcke der dritten Ebene entspricht, wenn kein Ressourcenblock der zweiten Ebene aus einer Ressourcenblockgruppierung der zweiten Ebene, bei der einer der Ressourcenblöcke der zweiten Ebene bereits zugeteilt wurde, verfügbar ist.

6. Verfahren nach Anspruch 1, das des Weiteren Folgendes umfasst:
Wiedereingliedern eines zurückgegebenen Ressourcenblocks der ersten Ebene in eine Ressourcenblockgruppierung der ersten Ebene, bei der einer der Ressourcenblöcke der ersten Ebene bereits zugeteilt worden ist.

7. Verfahren nach Anspruch 1, das des Weiteren Folgendes umfasst:
Zuteilen von Ressourcenblöcken aus einem Teil des Ressourceneinheiten-Pools, und
Wiedereingliedern zurückgegebener Ressourcenblöcke aus einem anderen Teil des Ressourceneinheiten-Pools.

8. Verfahren nach Anspruch 1, das des Weiteren Folgendes umfasst:
Umorganisieren des Ressourceneinheiten-Pools durch Verschieben von Ressourcenblöcken der ersten Ebene von einer Gruppierung zu einer anderen, um einen zusätzlichen Ressourcenblock der zweiten Ebene zu erstellen.

9. Verfahren nach Anspruch 8, bei dem das Umorganisieren nur dann durchgeführt wird, wenn eine Anforderung für einen Ressourcenblock der zweiten Ebene vorliegt und zu diesem Zeitpunkt kein Ressourcenblock der zweiten Ebene verfügbar ist.

10. Verfahren nach Anspruch 1. das des Weiteren Folgendes umfasst:
Festlegen, welche Ebene in dem ersten Ressourceneinheiten-Pool eine hohe Anzahl Anforderungen erhält, und
Umorganisieren des ersten Ressourceneinheiten-Pools durch Verschieben von Ressourcenblöcken von einer Gruppierung zu einer anderen, um einen zusätzlichen Ressourcenblock einer höheren Ebene bis hin zur festgelegten Ebene zu erstellen.

11. Verfahren nach Anspruch 1, das des Weiteren die folgenden Schritte umfasst:
Konfigurieren einer zweiten Datenstruktur, die einem zweiten Pool einer zweiten Art von Ressourceneinheiten entspricht,
Herstellen einer Beziehung zwischen Ressourceneinheiten der ersten Art in der ersten Datenstruktur und Ressourceneinheiten der zweiten Art in der zweiten Datenstruktur.
Benutzen der hergestellten Beziehung für das Zuteilen verfügbarer Ressourceneinheiten aus dem ersten und dem zweiten Ressourceneinheiten-Pool, um auf die Anforderung zu reagieren.

12. Verfahren nach Anspruch 11, bei dem zu der Beziehung eine Eineindeutigkeit zwischen einzelnen Ressourceneinheiten der ersten und der zweiten Art gehört.

13. Verfahren nach Anspruch 12, bei dem der erste Ressourceneinheiten-Pool erste Ressourceneinheiten der ersten Art auf der niedrigsten Ebene, die in Gruppen bereitgestellt werden, und zweite Ressourceneinheiten der ersten Art auf einer höheren Ebene, die in Gruppen bereitgestellt werden, enthält, die jeweils einer der Gruppen aus Ressourcenblöcken der ersten Ebene entsprechen, und
bei dem der zweite Ressourceneinheiten-Pool erste Ressourceneinheiten der zweiten Art auf der niedrigsten Ebene, die in Gruppen bereitgestellt werden, und zweite Ressourceneinheiten der zweiten Art auf einer höheren Ebene, die in Gruppen bereitgestellt werden, enthält, die jeweils einer der Gruppen aus Ressourceneinheiten der zweiten Art auf der ersten Ebene entsprechen.

14. Verfahren nach Anspruch 11, bei dem zu der Herstellung einer Beziehung das Herstellen einer Matrix gehört, wobei jede Reihe in der Matrix für eine Ressourceneinheit der ersten Art und jede Spalte für eine Ressourceneinheit der zweiten Art steht, so dass durch die Auswahl einer Reihe oder einer Spalte, die einer Ressourceneinheit der einen Art entspricht, gleichzeitig eine Spalte beziehungsweise eine Reihe ausgewählt wird, die einer Ressourceneinheit der anderen Art entspricht.

15. Verfahren nach Anspruch 14, das des Weiteren Folgendes umfasst:
Konfigurieren der Matrix, so dass jede Reihe nur eine der Spalten auswählt.

16. Verfahren nach Anspruch 15, das des Weiteren Folgendes umfasst:
Rekonfigurieren der Matrix.

17. Verfahren nach Anspruch 11, bei dem es sich bei den Ressourceneinheiten der ersten Art um Software-Ressourceneinheiten und bei den Ressourceneinheiten der zweiten Art um Hardware-Ressourceneinheiten handelt.

18. Verfahren nach Anspruch 11 bei Anwendung in einem CDMA-Kommunikationssystem (CDMA = Code Division Multiple Access), bei dem es sich bei den Ressourceneinheiten der ersten Art um CDMA-Spreizcodes und bei den Ressourceneinheiten der zweiten Art um Datenverarbeitungs- und Sende-Empfangs-Hardware handelt.

19. Kommunikationssystem, das Folgendes umfasst:
einen ersten Pool (12) aus Kommunikationsressourceneirtheiten, die in einer Struktur mit mehreren Ebenen konfiguriert sind, die Folgendes enthält:
Ressourcenblöcke der ersten Ebene (Figur 4: 20, 21, 22, 23, 25, 26), die jeweils einer oder mehreren Ressourceneinheiten entsprechen, in Gruppen aus Ressourcenblöcken der ersten Ebene bereitgestellt werden und eine niedrigste, erste Ebene bilden, und
Ressourcenblöcke der zweiten Ebene (Figur 4: 24, 27, 29, 30), die jeweils einer ersten Gruppierung der Ressourcenblöcke auf der ersten Ebene entsprechen und über der ersten Ebene eine zweite Ebene bilden, und
**gekennzeichnet durch**:
einen Kommunikationsressourcen-Manager (11, 200), der dafür vorgesehen ist, als Reaktion auf Kommunikationsressourcen-Anforderungen verschiedene der Ressourcenblöcke zuzuteilen, zugeteilte Ressourcenblöcke zu entfernen und regelmäßig umzuorganisieren, indem er einen oder mehrere Ressourcenblöcke einer niedrigeren Ebene von einer Gruppierung zu einer anderen verschiebt, um einen zusätzlichen Ressourcenblock einer höheren Ebene zu erstellen.

20. Kommunikationssystem nach Anspruch 19, bei dem der Kommunikationsressourcen-Manager dafür vorgesehen ist, die Struktur umzuorganisieren, wenn eine Anforderung für eine Ressource auf höherer Ebene vorliegt und zu diesem Zeitpunkt keine Ressource auf höherer Ebene verfügbar ist.

21. Kommunikationssystem nach Anspruch 19, bei dem der Kommunikationsressourcen-Manager dafür vorgesehen ist, mit Hilfe einer minimalen Anzahl von Verschiebungen von Ressourcenblöcken der niedrigeren Ebene von einer Gruppierung zu einer anderen umzuorganisieren, um einen zusätzlichen Ressourcenblock einer höheren Ebene zu erstellen.

22. Kommunikationssystem nach Anspruch 19, bei dem der Kommunikationsressourcen-Manager dafür vorgesehen ist, verfügbare Ressourcenblöcke aus einem Teil der Struktur zuzuteilen, und zurückgegebene Kommunikationsressourcenblöcke aus einem anderen Teil der Struktur wieder eingliedert.

23. Kommunikationssystem nach Anspruch 19, bei dem der Pool aus Kommunikationsressourceneinheiten Folgendes enthält:
dritte Ressourcenblöcke (Figur 4: 28), die jeweils einer zweiten Gruppierung der zweiten Ressourcenblöcke entsprechen und über der zweiten Ebene eine dritte Ebene bilden, und
bei dem der Kommunikationsressourcen-Manager dafür vorgesehen ist, Ressourcenblöcke so zuzuteilen, dass die größtmögliche Anzahl an Ressourcen der höheren Ebene für die Zuteilung erhalten bleibt.

24. Kommunikationssystem nach Anspruch 19, bei dem der Pool aus Kommunikationsressourceneinheiten Folgendes enthält:
dritte Ressourcenblöcke, die jeweils einer zweiten Gruppierung der zweiten Ressourcenblöcke entsprechen und über der zweiten Ebene eine dritte Ebene bilden, und
bei dem der Komlnunikationsressourcen-Manager dafür vorgesehen ist, zurückgegebene Ressourcenblöcke so wieder einzugliedern, dass die größtmögliche Anzahl an Ressourcen der höheren Ebene verfügbar ist.

25. Kommunikationssystem nach Anspruch 19, bei dem es sich bei der Struktur um eine listenförmige Datenstruktur handelt, die in einem Speicher gespeichert ist.

26. Kommunikationssystem nach Anspruch 19, das des Weiteren Folgendes umfasst:
einen zweiten Pool aus entsprechenden Kommunikationsressourceneinheiten, die in einer Struktur mit mehreren Ebenen konfiguriert sind,
eine Adressierungseinheit (206), die dafür vorgesehen ist. Ressourceneinheiten des ersten Pools mit entsprechenden Ressourceneinheiten des zweiten Pools zu adressieren,
einen Kommunikationsressourcen-Manager, der dafür vorgesehen ist, als Reaktion auf eine Kommunikationsressourcen-Anforderung eine oder mehrere der Ressourceneinheiten in dem ersten Pool zuzuteilen, und außerdem auf der Grundlage der ermittelten Adressierung die entsprechende eine oder die entsprechenden mehreren Ressourceneinheiten in dem zweiten Pool zuteilt.

27. Kommunikationssystem nach Anspruch 26, bei dem der erste Pool aus Ressourceneinheiten Software-Ressourceneinheiten und der zweite Pool aus Ressourceneinheiten Hardware-Ressourceneinheiten enthält.

28. Kommunikationssystem nach Anspruch 26, wobei das Kommunikationssystem ein CDMA-Funkkommunikationssystem ist, bei dem es sich bei dem ersten Ressourceneinheiten-Pool um CDMA-Spreizcodes und bei dem zweiten Ressourceneinheiten-Pool um Datenverarbeitungs- und Sende-Empfangs-Hardware-Einheiten handelt.

29. Kommunikationssystem nach Anspruch 28, bei dem die Adressierungseinheit eine Matrix enthält, wobei jede Reihe in der Matrix für einen anderen CDMA-Spreizcode und jede Spalte für eine andere Datenverarbeitungs- und Sende-Empfangs-Einheit steht, so dass durch die Auswahl eines CDMA-Spreizcodes oder einer Datenverarbeitungs- und Sende-Empfangs-Einheit gleichzeitig eine entsprechende Datenverarbeitungs- und Sende-Empfangs-Einheit beziehungsweise ein entsprechender CDMA-Spreizcode ausgewählt wird.

30. Kommunikationssystem nach Anspruch 29, bei dem die Adressierungseinheit ein Mittel enthält, mit dem die Matrix so konfiguriert werden kann, dass sich jede Reihe nur auf eine der Spalten bezieht.

31. Kommunikationssystem nach Anspruch 28, bei dem die Adressierungseinheit ein Mittel enthält, mit dem die Matrix rekonfiguriert werden kann.

32. Vorrichtung, die Folgendes umfasst:
ein Mittel, mit dem eine erste Datenstruktur gespeichert werden kann, die einem ersten Pool aus Ressourceneinheiten einer ersten Art entspricht, wobei der erste Ressourceneinheiten-Pool erste Ressourceneinheiten der ersten Art auf der niedrigsten Ebene (Figur 4: 20, 21, 22, 23, 25, 26), die in Gruppen bereitgestellt werden, und zweite Ressourceneinheiten der ersten Art auf einer höheren Ebene (Figur 4: 24, 27, 29, 30), die in Gruppen bereitgestellt werden, enthält, die jeweils einer der Gruppen aus Ressourcenblöcken der ersten Ebene entsprechen,
ein Mittel, mit dem eine Anforderung für eine oder mehrere Ressourceneinheiten empfangen werden kann,
**gekennzeichnet durch** das Vorhandensein
eines Zuteilungsmittels, mit dem eine verfügbare erste Ressourceneinheit aus einer der ersten Ressourcenblockgruppen zugeteilt werden kann, bei der einer der ersten Ressourcenblöcke bereits zugeteilt worden ist.

33. Vorrichtung nach Anspruch 32, bei der das Zuteilungsmittel dafür vorgesehen ist, einen ersten Ressourcenblock aus einer ersten Ressourcenblockgruppierung zuzuteilen, die einem der zweiten Ressourcenblöcke entspricht, wenn kein erster Ressourcenblock aus einer ersten Ressourcenblockgruppierung, bei der einer der ersten Ressourcenblöcke bereits zugeteilt wurde, verfügbar ist.

34. Vorrichtung nach Anspruch 33, bei der der erste Ressourceneinheiten-Pool des Weiteren Folgendes enthält:
dritte Ressourcenblöcke, die jeweils einer der Gruppen aus zweiten Ressourcenblöcken entsprechen, in Gruppen aus zweiten Ressourcenblöcken bereitgestellt werden und eine höhere, dritte Ebene bilden, und
wenn kein erster Ressourcenblock aus einer ersten oder einer zweiten Ressourcenblockgruppierung verfügbar ist, ist das Zuteilungsmittel dafür vorgesehen, einen ersten Ressourcenblock aus einer der dritten Ressourcenblockgruppierungen zuzuteilen.

35. Vorrichtung nach Anspruch 34, bei der das Empfangsmittel dafür vorgesehen ist, eine Anforderung von einem zweiten Ressourcenblock zu empfangen, und
das Zuteilungsmittel dafür vorgesehen ist, einen verfügbaren zweiten Ressourcenblock aus einer zweiten Ressourcenblockgruppierung zuzuteilen, bei der einer der zweiten Ressourcenblöcke bereits zugeteilt worden ist.

36. Vorrichtung nach Anspruch 35, bei der:
das Zuteilungsmittel dafür vorgesehen ist, einen zweiten Ressourcenblock aus einer zweiten Ressourcenblockgruppierung zuzuteilen, die einem der dritten Ressourcenblöcke entspricht, wenn kein zweiter Ressourcenblock aus einer zweiten Ressourcenblockgruppierung, bei der einer der zweiten Ressourcenblöcke bereits zugeteilt wurde, verfügbar ist.

37. Vorrichtung nach Anspruch 32, bei der:
ein Wiedereingliederungsmittel dafür vorgesehen ist, einen zurückgegebenen ersten Ressourcenblock wieder in eine erste Ressourcenblockgruppierung, bei der einer der ersten Ressourcenblöcke bereits zugeteilt worden ist, einzugliedern.

38. Vorrichtung nach Anspruch 32, bei der:
das Zuteilungsmittel dafür vorgesehen ist. Ressourcenblöcke aus einem Teil des Ressourceneinheiten-Pools zuzuteilen, und
das Wiedereingliederungsmittel dafür vorgesehen ist, zurückgegebene Ressourcenblöcke aus einem anderen Teil des Ressourceneinheiten-Pools wieder einzugliedern.

39. Vorrichtung nach Anspruch 32, die des Weiteren Folgendes umfasst:
ein Umorganisierungsmittel, mit dem der Ressourceneinheiten-Pool durch Verschieben von ersten Ressourcenblöcken von einer Gruppierung zu einer anderen umorganisiert werden kann, um einen zusätzlichen zweiten Ressourcenblock zu erstellen.

40. Vorrichtung nach Anspruch 39, bei der das Umorganisieren des Ressourceneinheiten-Pools durchgeführt wird, wenn eine Anforderung für einen zweiten Ressourcenblock vorliegt und zu diesem Zeitpunkt kein zweiter Ressourcenblock verfügbar ist.

41. Vorrichtung nach Anspruch 32, die des Weiteren Folgendes umfasst:
ein Festlegungsmittel, mit dem festgelegt werden kann, welche Ebene in dem ersten Ressourceneinheiten-Pool eine größere Anzahl Anforderungen erhält, und
ein Umorganisationsmittel, mit dem der erste Ressourceneinheiten-Pool durch Verschieben von Ressourcenblöcken von einer Gruppierung zu einer anderen umorganisiert werden kann, um einen zusätzlichen Ressourcenblock einer höheren Ebene bis hin zur festgelegten Ebene zu erstellen.

42. Vorrichtung nach Anspruch 32, die des Weiteren Folgendes umfasst:
ein Mittel, mit dem eine zweite Datenstruktur gespeichert werden kann, die einem zweiten Pool einer zweiten Art von Ressourceneinheiten entspricht,
ein Mittel, mit dem eine Beziehung zwischen Ressourceneinheiten der ersten Art in der ersten Datenstruktur und Ressourceneinheiten der zweiten Art in der zweiten Datenstruktur hergestellt werden kann, und
ein Mittel, mit dem eine Anforderung einer Ressource empfangen werden kann, die eine oder mehrere Ressourceneinheiten aus dem ersten und dem zweiten Ressourceneinheiten-Pool benötigt, und das die ermittelte Beziehung für das Zuteilen verfügbarer Ressourceneinheiten aus dem ersten und dem zweiten Ressourceneinheiten-Pool als Reaktion auf die Anforderung benutzen kann.

43. Vorrichtung nach Anspruch 42, bei der die Beziehung sicherstellt, dass, wenn eine der Ressourceneinheiten der ersten Art in dem ersten Pool zugeteilt werden kann, auch eine entsprechende Ressourceneinheit der zweiten Art in dem zweiten Pool zugeteilt werden kann.

44. Vorrichtung nach Anspruch 42, bei der zu der Beziehung eine Eineindeutigkeit zwischen einzelnen Ressourceneinheiten der ersten und der zweiten Art gehört.

45. Vorrichtung nach Anspruch 42, bei der der erste Ressourceneinheiten-Pool erste Ressourceneinheiten der ersten Art auf der niedrigsten Ebene, die in Gruppen bereitgestellt werden, und zweite Ressourceneinheiten der ersten Art auf einer höheren Ebene, die in Gruppen bereitgestellt werden, enthält, die jeweils einer der Gruppen aus Ressourcenblöcken der ersten Ebene entsprechen, und
bei dem der zweite Ressourceneinheiten-Pool erste Ressourceneinheiten der zweiten Art auf der niedrigsten Ebene, die in Gruppen bereitgestellt werden, und zweite Ressourceneinheiten der zweiten Art auf einer höheren Ebene, die in Gruppen bereitgestellt werden, enthält, die jeweils einer der Gruppen aus Ressourceneinheiten der zweiten Art auf der ersten Ebene entsprechen.

46. Vorrichtung nach Anspruch 42, bei der das Beziehungsherstellungsmittel dafür vorgesehen ist, eine Matrix herzustellen, wobei jede Reihe in der Matrix für eine Ressourceneinheit der ersten Art und jede Spalte für eine Ressourceneinheit der zweiten Art steht, so dass durch die Auswahl einer Reihe oder einer Spalte, die einer Ressourceneinheit der einen Art entspricht, gleichzeitig eine Spalte beziehungsweise eine Reihe ausgewählt wird, die einer Ressourceneinheit der anderen Art entspricht.

47. Vorrichtung nach Anspruch 42, die des Weiteren Folgendes umfasst:
ein Mittel, mit dem die Matrix so konfiguriert werden kann, dass jede Reihe nur eine der Spalten auswählt.

48. Vorrichtung nach Anspruch 42, die des Weiteren Folgendes umfasst:
ein Mittel, mit dem die Matrix rekonfiguriert werden kann.

## Revendications

1. Procédé comprenant les étapes de:
configuration d'une première structure de données correspondant à un premier pool d'un premier type d'unités de ressource comprenant:
des blocs de ressource de premier niveau (figure 4: 20, 21, 22, 23, 25, 26), chacun correspondant à une ou plusieurs du premier type d'unités de ressource, fournis dans des groupes de blocs de ressource de premier niveau et formant un premier niveau le plus bas du premier pool d unités de ressource, et
des blocs de ressource de second niveau (figure 4: 24, 27, 29, 30), chaque bloc de ressource de second niveau correspondant à un des groupes de blocs de ressource du premier niveau, fournis dans de groupes de blocs de ressource de second niveau et formant un second niveau plus élevé du pool d'unités de premier ressource;
**caractérisé par**:
la réception d'une demande pour une ressource qui requiert qu'une ou plusieurs unités de ressource à partir d'au moins ledit premier pool d'unités de ressource; et
l'allocation d'au moins un bloc de ressource disponible à partir d'un des groupes de blocs de ressource de premier niveau dans lequel un des blocs de ressource de premier niveau est déjà alloué.

2. Procédé selon la revendication 1, comprenant en outre:
si aucun bloc de ressource n'est disponible à partir du groupe de blocs de ressource de premier niveau dans lequel un des blocs de ressource de premier niveau est déjà alloué, l'allocation d'un bloc de ressource à partir du groupe de blocs de ressource de premier niveau correspondant à un des blocs de ressource de second niveau.

3. Procédé selon la revendication 2, dans lequel le premier pool d'unités de ressource comprend en outre:
des blocs de ressource de troisième niveau (figure 4: 28), chaque bloc de ressource du troisième niveau correspondant à un des groupes de blocs de ressource de second niveau, fournis dans des groupes de blocs de ressource de second niveau et formant un troisième niveau plus élevé, et
le procédé comprenant en outre:
si aucun bloc de ressource n'est disponible à partir d'un second groupement de blocs de ressource de premier ou de second niveau, l'allocation d'un bloc de ressource à partir d'un des groupes de blocs de ressource de troisième niveau.

4. Procédé selon la revendication 3, comprenant en outre:
la réception d'une demande pour un bloc de ressource de second niveau, et
l'allocation d'un bloc de ressource de second niveau disponible à partir d'un groupement de blocs de ressource de second niveau comprenant au moins un bloc de ressource de second niveau déjà alloué.

5. Procédé selon la revendication 4, comprenant en outre:
si aucun bloc de ressource de second niveau n'est disponible à partir d'un groupement de blocs de ressource de second niveau dans lequel un des blocs de ressource de second niveau est déjà alloué, l'allocation d'un bloc de ressource de second niveau à partir d'un groupement de blocs de ressource de second niveau correspondant à un des blocs de ressource de troisième niveau.

6. Procédé selon la revendication 1, comprenant en outre:
la réattribution d'un bloc de ressource de premier niveau retourné à un groupement de blocs de ressource de premier niveau dans lequel un des blocs de ressource de premier niveau est déjà alloué.

7. Procédé selon la revendication 1, comprenant en outre:
l'allocation des blocs de ressource à partir d'une partie du pool d'unités de ressource, et
la réattribution des blocs de ressource retournés à partir d'une autre partie du pool d'unités de ressource.

8. Procédé selon la revendication 1, comprenant en outre:
la réorganisation du pool d'unités de ressource en déplaçant des blocs de ressource du premier niveau d'un groupement à un autre groupement pour créer un bloc de ressource de second niveau supplémentaire.

9. Procédé selon la revendication 8, dans lequel l'étape de réorganisation est réalisée seulement lorsqu'il y a une demande pour un bloc de ressource de second niveau et aucun bloc de ressource de second niveau n'est alors disponible.

10. Procédé selon la revendication 1, comprenant en outre:
la détermination de quel niveau dans le premier pool d'unités de ressource reçoit un nombre élevé de demandes, et
la réorganisation du premier pool d'unités de ressource en déplaçant des blocs de ressource d'un groupement à un autre groupement pour créer un bloc de ressource de niveau plus élevé supplémentaire jusqu au niveau déterminé.

11. Procédé selon la revendication 1, comprenant en outre les étapes de:
configuration d'une seconde structure de données correspondant à un second pool d'un second type d'unités de ressource:
établissement d'une relation entre les unes du premier type d'unités de ressource dans la première structure de données et les unes du second type d'unités de ressource dans la seconde structure de données:
utilisation de la relation établie pour allouer des unités de ressource disponibles des premier et second pools d'unités de ressource pour répondre à la demande.

12. Procédé selon la revendication 11, dans lequel la relation comprend une correspondance un à un entre les unités de ressources individuelles des premier et second types d'unités de ressource.

13. Procédé selon la revendication 12, dans lequel le premier pool d'unités de ressource comprend des unités de ressource de premier niveau le plus bas du premier type fournies dans des groupes, et des unités de ressource de second niveau plus élevé du premier type fournies dans des groupes, chacun correspondant à un des groupes de blocs de ressource de premier niveau, et
dans lequel le second pool d'unités de ressource comprend des unités de ressource de premier niveau le plus bas du second type fournies dans des groupes, et des unités de ressource de second niveau plus élevé du second type fournies dans des groupes, chacun correspondant à un des groupes des unités de ressource de premier niveau du second type.

14. Procédé selon la revendication 11, dans lequel l'étape d'établissement comprend l'établissement d'une matrice où chaque rangée dans la matrice représente une unité de ressource du premier type et où chaque colonne représente une unité de ressource du second type de sorte que la sélection d'une rangée ou d'une colonne correspondant à une unité de ressource d'un type sélectionne aussi une colonne ou une rangée, respectivement correspondant à une unité de ressource d'un autre type.

15. Procédé selon la revendication 14, comprenant en outre:
la configuration de la matrice pour que chaque rangée sélectionne seulement une des colonnes.

16. Procédé selon la revendication 15, comprenant en outre:
la reconfiguration de la matrice.

17. Procédé selon la revendication 11, dans lequel pour le premier type d'unités de ressource il s'agit d'unités de ressource logicielles et pour le second type d'unités de ressource il s'agit d'unités de ressource matérielles.

18. Procédé selon la revendication 11 comme appliqué à un système de communication à accès multiple par division de code (CDMA), dans lequel pour le premier type d'unités de ressource il s'agit de codes d'étalement CDMA et pour le second type d'unités de ressource il s'agit de matériel de traitement et d'émission-réception de données.

19. Système de communication, comprenant:
un premier pool (12) d'unités de ressource de communication configuré dans une structure ayant plusieurs niveaux comprenant:
des blocs de ressource de premier niveau (figure 4: 20, 21, 22, 23, 25, 26), chaque bloc de ressource de premier niveau correspondant à une ou plusieurs unités de ressource, fournis dans des groupes de blocs de ressource de premier niveau, et formant un premier niveau le plus bas, et
des blocs de ressource de second niveau (figure 4: 24, 27, 29, 30), chaque bloc de ressource de second niveau correspondant à un premier groupement des blocs de ressource de premier niveau, formant un second niveau au-dessus du premier niveau; et
**caractérisé en**:
un gestionnaire de ressource de communication (11, 200) fourni pour allouer plusieurs des blocs de ressource en réponse à des demandes de ressource de communication, enlever des blocs de ressource alloués, et réorganiser périodiquement en déplaçant un ou plusieurs blocs de ressource de niveau inférieur d'un groupement à un autre groupement pour créer un bloc de ressource de niveau plus élevé supplémentaire.

20. Système de communication selon la revendication 19. dans lequel le gestionnaire de ressource de communication est fourni pour réorganiser la structure lorsqu'il y a une demande pour une ressource du niveau plus élevé et aucune ressource de niveau plus élevé n'est alors disponible.

21. Système de communication selon la revendication 19, dans lequel le gestionnaire de ressource de communication est fourni pour réorganiser en utilisant en nombre minimal de déplacements de bloc de ressource de niveau inférieur d'un groupement à un autre groupement pour créer un bloc de ressource de niveau plus élevé supplémentaire.

22. Système de communication selon la revendication 19, dans lequel le gestionnaire de ressource de communication est fourni pour allouer des blocs de ressource disponibles provenant d'une partie de la structure et réattribue des blocs de ressource de communication retournés provenant d'une autre partie de la structure.

23. Système de communication selon la revendication 19, dans lequel le pool d'unités de ressource de communication comprend:
des troisième blocs de ressource (figure 4: 28), chaque troisième bloc de ressource correspondant à un second groupement des seconds blocs de ressource, formant un troisième niveau au-dessus du second niveau, et
dans lequel le gestionnaire de ressource de communication est fourni pour allouer des blocs de ressource pour qu'un nombre plus grand de ressources de niveau plus élevé soit maintenu pour l'allocation.

24. Système de communication selon la revendication 19, dans lequel le pool d'unités de ressource de communication comprend:
des blocs de troisième ressource, chaque bloc de troisième ressource correspondant à un second groupe des seconds blocs de ressource, formant un troisième niveau au-dessus du second niveau, et
dans lequel le gestionnaire de ressource de communication est fourni pour réattribuer des blocs de ressource retournés pour créer un nombre maximal de ressources de niveau plus élevé disponibles.

25. Système de communication selon la revendication 19, dans lequel la structure est une structure de données de liste stockées dans une mémoire.

26. Système de communication selon la revendication 19, comprenant en outre:
un second pool d'unités de ressource de communication respectives, configuré dans une structure ayant plusieurs niveaux;
un dispositif de mappage (206) est formé pour mapper les unités de ressource du premier pool d'unités de ressource à celles correspondantes du second pool d'unités de ressource:
un gestionnaire de ressource de communication, en réponse à une demande de ressource de communication, est fourni pour allouer une ou plusieurs des unités de ressource dans le premier pool, qui alloue aussi l'une ou les unités de ressource correspondantes dans le second pool sur la base du mappage établie.

27. Système de communication selon la revendication 26, dans lequel le premier pool d'unités de ressource comprend des unités de ressource logicielles et le second pool d'unités de ressource comprend des unités de ressource matérielles.

28. Système de communication selon la revendication 26, dans lequel le système de communication est un système de communication par radio à accès multiple par division de code (CDMA), dans lequel pour le premier pool d'unités de ressource il s'agit de codes d'étalement COMA et pour le second pool d'unités de ressource il s'agit d'unités matérielles de traitement et d'émission-réception de données.

29. Système de communication selon la revendication 28, dans lequel le dispositif de mappage comprend une matrice où chaque rangée dans la matrice représente un code d'étalement de CDMA différent et où chaque colonne représente une unité de traitement et d'émission-réception de données différente de sorte que la sélection d'un code d'étalement CDMA ou une d'unité de traitement et d'émission-réception de données sélectionne aussi une unité de traitement et d'émission-réception de données ou un code d'étalement CDMA correspondants, respectivement.

30. Système de communication selon la revendication 29, dans lequel le dispositif de mappage comprend un moyen pour configurer la matrice pour que chaque rangée soit liée à seulement une des colonnes.

31. Système de communication selon la revendication 28, dans lequel le dispositif de mappage comprend un moyen pour reconfigurer la matrice.

32. Appareil comprenant:
un moyen pour stocker une première structure de données correspondant à un premier pool d'un premier type d'unités de ressource, dans lequel le premier pool d'unités de ressource comprend des unités de ressource de premier niveau le plus bas (figure 4: 20, 21, 22, 23, 25, 26) du premier type fournies dans des groupes, et des unités de ressource de second niveau plus élevé (figure 4: 24, 27, 29, 30) du premier type fournies dans des groupes, chacune correspondant à un des groupes de blocs de ressource de premier niveau,
un moyen pour recevoir une demande pour une ou plusieurs des unités de ressource;
**caractérisé par** le fait d'avoir:
un moyen d'allocation pour allouer une première unité de ressource disponible provenant d'un des groupes de blocs de première ressource dans lequel un des premiers blocs de ressource est déjà alloué.

33. Appareil selon la revendication 32, dans lequel si aucun bloc de première ressource n'est disponible dans un groupement de premier bloc de ressource dans lequel un des premiers blocs de ressource est déjà alloué, le moyen d'allocation est prévu pour allouer un premier bloc de ressource provenant d'un groupement de premier bloc de ressource correspondant à un des seconds blocs de ressource.

34. Appareil selon la revendication 33, dans lequel le premier pool d'unités de ressource comprend en outre:
des blocs de troisième ressource, chaque bloc de troisième ressource correspondant à un des groupes de blocs de seconde ressource, fournis dans des groupes de bloc de seconde ressource et formant un troisième niveau plus élevé, et
si aucun premier bloc de ressource n'est disponible dans un groupement de blocs de première ou seconde ressource, le moyen d'allocation est prévu pour allouer un bloc de première ressource provenant d'un des groupements de blocs de troisième ressource.

35. Appareil selon la revendication 34, dans lequel le moyen de réception est prévu pour recevoir une demande à partir d'un bloc de seconde ressource, et
le moyen d'allocation est prévu pour allouer un bloc de seconde ressource disponible provenant d'un groupement de blocs de seconde ressource dans lequel un des blocs de seconde ressource est déjà alloué.

36. Appareil selon la revendication 35, dans lequel:
si aucun bloc de seconde ressource n'est disponible dans un groupement de blocs de seconde ressource dans lequel un des blocs de seconde ressource est déjà alloué, le moyen d'allocation est fourni pour allouer un bloc de seconde ressource provenant d'un groupement de blocs de seconde ressource correspondant à un des blocs de troisième ressource.

37. Appareil selon la revendication 32, dans lequel:
le moyen de réattribution est prévu pour réattribuer un bloc de première ressource retourné à un groupement de blocs de première ressource dans lequel un des blocs de première ressource est déjà alloué.

38. Appareil selon la revendication 32, dans lequel:
le moyen d'allocation est prévu pour allouer des blocs de ressource provenant d'une partie du pool d'unités de ressource, et
le moyen de réattribution est fourni pour réattribuer les blocs de ressource retournés provenant d'une autre partie du pool d'unités de ressource.

39. Appareil selon la revendication 32, comprenant en outre:
un moyen de réorganisation pour réorganiser le pool d'unités de ressource en déplaçant des blocs de première ressource d'un groupement à un autre groupement pour créer un bloc de seconde ressource additionnel.

40. Appareil selon la revendication 39, dans lequel la réorganisation du pool d'unités de ressource est réalisée lorsqu'il y a une demande pour un bloc de seconde ressource et aucun bloc de seconde ressource n'est alors disponible.

41. Appareil selon la revendication 32, comprenant en outre:
un moyen de détermination pour déterminer quel niveau dans le pool d'unités de première ressource reçoit un nombre plus grand de demandes, et
un moyen de réorganisation pour réorganiser le pool d'unités de première ressource en déplaçant des blocs de ressource d'un groupement à un autre groupement pour créer un bloc de ressource de niveau plus élevé additionnel jusqu'au niveau déterminé.

42. Appareil selon la revendication 32, comprenant en outre:
un moyen pour stocker une seconde structure de données correspondant à un second pool d'un second type d'unités de ressource:
un moyen pour établir une relation entre les unes du premier type des unités de ressource dans la première structure de données et les unes du second type d'unités de ressource dans la seconde structure de données; et
un moyen pour recevoir une demande pour une ressource qui requiert une unité de ressource ou plus provenant des premier et second pools d'unités de ressource, pour utiliser la relation établie pour allouer des unités de ressource disponibles provenant des premier et second pools d'unités de ressource pour répondre à la demande.

43. Appareil selon la revendication 42, dans lequel la relation assure que si une des unités de ressource du premier type dans le premier pool est disponible pour l'allocation, une unité de ressource du second type correspondante dans le second pool est disponible pour l'allocation.

44. Appareil selon la revendication 42, dans lequel la relation comprend une correspondance une à une entre les unités de ressource individuelles des premier et second types d'unités de ressource.

45. Appareil selon la revendication 42, dans lequel le premier pool d'unités de ressource comprend des unités de ressource de premier niveau le plus bas du premier type fournies dans des groupes, et des unités de ressource de second niveau plus élevé du premier type fournies dans des groupes, chacun correspondant à un des groupes de blocs de ressource de premier niveau, et
dans lequel le second pool des unités de ressource comprend des unités de ressource de premier niveau le plus bas du second type fournies dans des groupes, et des unités de ressource de second niveau plus élevé du second type fournies dans des groupes, chacun correspondant à un des groupes des unités de ressource de premier niveau du second type.

46. Appareil selon la revendication 42, dans lequel le moyen d'établissement est fourni pour établir une matrice où chaque rangée de la matrice représente une unité de ressource du premier type et où chaque colonne représente une unité de ressource du second type de sorte que la sélection d'une rangée ou d'une colonne correspondant à une unité de ressource d'un type sélectionne aussi une colonne ou une rangée, respectivement, correspondant à une unité de ressource d'un autre type.

47. Appareil selon la revendication 42, comprenant en outre:
un moyen pour configurer la matrice pour que chaque rangée sélectionne seulement une des colonnes.

48. Appareil selon la revendication 42, comprenant en outre:
un moyen pour reconfigurer la matrice.
